# EUROPÄISCHE PATENTSCHRIFT

(11) **EP 2 651 612 B1**
(45) Veröffentlichungstag und Bekanntmachung des Hinweises auf die Patenterteilung: **17.09.2014**
(21) Anmeldenummer: 11794771.3
(22) Anmeldetag: 14.12.2011
(51) Int. Cl.: B27N 1/00, B27N 3/02, B32B 21/08

(54) **MEHRSCHICHTIGE LIGNOCELLULOSEHALTIGE FORMKÖRPER MIT GERINGER FORMALDEHYDEMISSION**
MULTI-LAYER MOLDED BODY CONTAINING LIGNOCELLULOSE AND HAVING LOW FORMALDEHYDE EMISSION
CORPS MOULÉ MULTICOUCHE CONTENANT DE LA LIGNOCELLULOSE, AVEC UNE FAIBLE ÉMISSION DE FORMALDÉHYDE

(30) Priorität: 17.12.2010 EP 10195648
(43) Veröffentlichungstag der Anmeldung: 23.10.2013
(73) Patentinhaber: BASF SE, 67056 Ludwigshafen (DE)
(72) Erfinder: KÄSMAYR, Daniel, 67061 Ludwigshafen (DE); ROSCHMANN, Konrad, 68526 Ladenburg (DE); SCHMIDT, Michael, 67373 Dudenhofen (DE); FINKENAUER, Michael, 67550 Worms (DE); KALBE, Michael, 69469 Weinheim (DE); WEINKÖTZ, Stephan, 67434 Neustadt (DE)
(86) Internationale Anmeldenummer: PCT/EP2011/072762
(87) Internationale Veröffentlichungsnummer: WO 2012/080338

(56) Entgegenhaltungen:
- WO-A1-2009/037240
- WO-A1-2010/031718
- WO-A2-2008/046892

## Beschreibung

Die vorliegende Erfindung betrifft einen mehrschichtigen lignocellulosehaltigen Formkörper wie in den Ansprüchen definiert.

Ferner betrifft die vorliegende Erfindung ein Verfahren zur Herstellung eines mehrschichtigen lignocellulosehaltigen Formkörpers sowie die Verwendung eines mehrschichtigen lignocellulosehaltigen Formkörpers zur Herstellung von Gegenständen aller Art und im Baubereich sowie zur Herstellung von Möbeln und Möbelteilen, von Verpackungsmaterialien, im Hausbau oder im Innenausbau oder in Kraftfahrzeugen.

Werkstoffe auf Basis von Lignocellulose sind bekannt. Wichtige Beispiele für lignocellulosehaltige Stoffe sind Holzteile, wie Holzlagen, Holzstreifen, Holzspäne, oder Holzfasern, wobei die Holzfasern gegebenenfalls auch von holzfaserhaltigen Pflanzen, wie Flachs, Hanf, Sonnenblumen, Topinambur oder Raps stammen können. Ausgangsmaterialien für solche Holzteile oder Holzpartikel sind üblicherweise Durchforstungshölzer, Industrieresthölzer und Gebrauchthölzer sowie holzfaserhaltige Pflanzen.

Die Aufbereitung zu den gewünschten lignocellulosehaltigen Stoffen, wie Holzpartikel, erfolgt nach bekannten Verfahren, siehe zum Beispiel M. Dunky, P. Niemt, Holzwerkstoffe und Leime, S. 91-156, Springer Verlag Heidelberg, 2002.

Lignocellulosehaltige Formkörper, im Falle von Holz als Lignocellulose hier auch Holzwerkstoffe genannt, sind eine kostengünstige und Ressourcen schonende Alternative zu Massivholz und haben große Bedeutung, insbesondere im Möbelbau und als Baumaterialien, erlangt. Als Ausgangsstoffe für Holzwerkstoffe dienen in der Regel Holzlagen unterschiedlicher Stärke, Holzstreifen, Holzspäne oder Holzfasern aus verschiedenen Hölzern. Solche Holzteile oder Holzpartikel werden üblicherweise bei erhöhter Temperatur mit natürlichen und/oder synthetischen Bindemitteln und gegebenenfalls unter Zugabe weiterer Additive zu platten- oder strangförmigen Holzwerkstoffen verpresst. Beispiele für solche lignocellulosehaltigen Formkörper oder Holzwerkstoffe sind mitteldichte Faserplatten (MDF), Holzspanwerkstoffe - wie Spanplatten und Grobspanplatten (OSB, oriented strand board) -, Sperrholz - wie Furniersperrholz - und Leimholz.

Als Bindemittel werden in der Regel formaldehydhaltige Bindemittel eingesetzt, beispielsweise Harnstoff-Formaldehydharze oder melaminhaltige Harnstoff-Formaldehydharze. Die Harze werden durch Polykondensation von Formaldehyd mit Harnstoff und/oder Melamin hergestellt. Die Verwendung derartiger Formaldehydharze kann dazu führen, dass im fertigen Holzwerkstoff freier Formaldehyd vorliegt. Durch Hydrolyse der Polykondensate kann zusätzlicher Formaldehyd freigesetzt werden. Der im Holzwerkstoff enthaltene freie Formaldehyd und der während der Lebensdauer des Holzwerkstoffs durch Hydrolyse freigesetzte Formaldehyd können an die Umgebung abgegeben werden.

Formaldehyd kann oberhalb bestimmter Grenzwerte beim Menschen Allergien, Haut-, Atemwegs- oder Augenreizungen verursachen. Die Reduzierung der Formaldehydemission in Bauteilen, vor allem im Innenbereich, ist daher eine wichtige Herausforderung.

Aus dem Stand der Technik sind folgende Maßnahmen bekannt, die Formaldehydemission aus Holzwerkstoffen zu reduzieren oder zu unterbinden:
- Einsatz von Aminoplast-Leimen, die mit wenig Formaldehyd hergestellt wurden
- Zusatz von Formaldehydfängern zum Aminoplast-Leim, beispielsweise Harnstoff und/oder Melamin
- Nachbehandlung der fertigen Holzwerkstoffe mit sogenannten Formaldehydfängern, wie Amingruppen-enthaltenden Verbindungen

Derartige Maßnahmen sind aber noch nicht voll befriedigend. Die Herstellung der Aminoplastleime mit weniger Formaldehyd oder der Zusatz von Formaldehydfängern zum Aminoplastleim führt dazu, dass der Leim langsamer härtet, was die Verweilzeiten in der Heißpresse verlängert und somit die Wirtschaftlichkeit der Holzwerkstoffherstellung verschlechtert.

WO 2010/031718 A1 (BASF SE) beschreibt einen mehrschichtigen lignocellulosehaltigen Formkörper aus einer Mittelschicht und einer Deckschicht, in welcher das Bindemittel für die Mittelschicht Formaldehydharz und/oder organisches Isocyanat ist und das Bindemittel für die Deckschicht ein (Co)polymer aus ethylenisch ungesättigten Carbonsäuren mit weiteren ethylenisch ungesättigten Monomeren und unter bestimmten Voraussetzungen einen Formaldehydfänger enthält. WO 2010/031718 A1 offenbart nicht ein organisches Isocyanat als Komponente des Bindemittels für die Deckschicht.

WO 2008/046892 A2 (BASF SE) beschreibt einen leichten holzhaltigen Stoff enthaltend Holzpartikel, einen Füllstoff aus verschäumten oder verschäumbaren Kunststoffteilchen und Bindemittel, sowie einen mehrschichtigen Holzwerkstoff enthaltend den genannten leichten holzhaltigen Stoff. WO 2008/046892 A2 offenbart nicht das Bindemittel b) gemäß vorliegender Anmeldung.

WO 2009/037240 A2 (BASF SE) beschreibt einen leichten holzhaltigen Stoff enthaltend Holzpartikel, einen Füllstoff aus verschäumten oder verschäumbaren Kunststoffteilchen und ein Bindemittel aus Aminoplastharz und organischem Isocyanat, sowie einen mehrschichtigen Holzwerkstoff enthaltend den genannten leichten holzhaltigen Stoff. WO 2009/037240 A2 offenbart nicht das Bindemittel b) gemäß vorliegender Anmeldung.

Die im Stand der Technik beschriebenen mehrschichtigen Formkörper lassen in puncto mechanische Belastbarkeiten (zum Beispiel Querzugfestigkeit, Abhebefestigkeit der Schichten gemäß der in den Beispielen genannten entsprechenden Prüfnorm) sowie Feuchtebeständigkeit (zum Beispiel 24-Stunden-Quellung oder Wasseraufnahme gemäß der in den Beispielen genannten entsprechenden Prüfnorm oder Prüfvorschrift) noch Raum für Verbesserungen.

Die Aufgabe der vorliegenden Erfindung war demnach, die im Stand der Technik aufgezeigten Nachteile zu überwinden. Insbesondere sollten mehrschichtige lignocellulosehaltige Fomkörper aufgezeigt werden, deren Formaldehydemission reduziert oder praktisch nicht vorhanden sein sollte und wobei die mehrschichtigen lignocellulosehaltigen Formkörper gute mechanische Eigenschaften, insbesondere bei relativ geringem spezifischem Gewicht, haben sollten.

Die Aufgabe wurde gelöst durch einen mehrschichtigen lignocellulosehaltigen Formkörper aus
A) einer Mittelschicht oder mehreren Mittelschichten, enthaltend lignocellulosehaltige Partikel, welche erhältlich ist/sind durch Verwendung eines Bindemittels (a) und
B) einer Deckschicht oder mehreren Deckschichten, enthaltend lignocellulosehaltige Partikel, welche erhältlich ist/sind durch Verwendung eines Bindemittels (b),
wobei das Bindemittel (a) ausgewählt wird aus der Gruppe bestehend aus (a1) Formaldehydharzen und (a2) einem organischen Isocyanat mit mindestens zwei Isocyanatgruppen;
wobei das Bindemittel (b) folgende Komponenten enthält:

Eine wässrige Komponente (I) enthaltend
(i) ein Polymer A, welches aus folgenden Monomeren aufgebaut ist:
   a) 80 bis 100 Gew.-% wenigstens einer ethylenisch ungesättigten Mono- und/oder Dicarbonsäure (Monomer(e) A1) und
   b) 0 bis 20 Gew.-% wenigstens eines weiteren ethylenisch ungesättigten Monomeren, welches sich von den Monomeren A1 unterscheidet (Monomer(e) A2),
      gegebenenfalls
(ii) einen niedermolekularen Vernetzer mit mindestens zwei funktionellen Gruppen welche ausgewählt sind aus der Gruppe Hydroxy, Carbonsäure und deren Derivate, primäres, sekundäres und tertiäres Amin, Epoxy, Aldehyd,
ein organisches Isocyanat mit mindestens zwei Isocyanatgruppen als Komponente (II),
und gegebenenfalls eine Komponente (III) als wässrige Dispersion, enthaltend ein oder mehrere Polymer(e) M, welches aus folgenden Monomeren aufgebaut ist:
a) 0 bis 50 Gew.-% wenigstens eines ethylenisch ungesättigten Monomeren, welches wenigstens eine Epoxid- und/oder wenigstens eine Hydroxyalkylgruppe enthält (Monomer(e) M1), und
b) 50 bis 100 Gew.-% wengistens eines weiteren ethylenisch ungesättigten Monomeren, welches sich von den Monomeren M1 unterscheidet (Monomer(e) M2)
sowie gegebenenfalls übliche Additive als Komponente (IV)
und wobei mindestens eine Mittelschicht A) expandierte Kunststoffteilchen enthält und gegebenenfalls mindestens eine Deckschicht B) expandierte Kunststoffteilchen enthält,
und gegebenenfalls enthält das Bindemittel (b) einen Formaldehydfänger.

Der Begriff Lignocellulose ist dem Fachmann bekannt. Wichtige Beispiele für Lignocellulose sind Holz, Rinde, Kork, Bagasse, Stroh, Flachs, Bambus, Alfagras, Reisschalen, Sisal- und Kokosfasern. Das Material kann dabei in Form vom Granulaten, Strands, Spänen, Fasern oder Mehl vorliegen. Gut geeignete Beispiele für lignocellulosehaltige Partikel sind Holzteile, wie Holzlagen, Holzstreifen, Holzspäne, oder Holzfasern, wobei die Holzfasern gegebenenfalls auch von holzfaserhaltigen Pflanzen, wie Flachs, Hanf, Sonnenblumen, Topinambur oder Raps stammen können.

Bevorzugt als lignocellulosehaltige Partikel sind Holzpartikel, Flachspartikel, insbesondere Holzfasern oder Holzspäne sowie Flachsfasern oder Flachsspäne, letztere im allgemeinen als Flachsschäben bezeichnet.

Die oben genannte Lignocellulose kann in den oben genanten Formen natürlich auch in Mischungen eingesetzt werden, beispielsweise Mischungen aus Holzfasern mit Flachsfasern oder Holzspänen mit Flachsschäben.

Das Bindemittel (a) enthält ein Formaldehydharz, vorzugsweise Aminoplastharz (a1) und/oder ein organisches Isocyanant mit mindestens zwei Isocyanatgruppen (a2).

Wenn das Bindemittel (a) ein Aminoplastharz enthält, enthält das Bindemittel (a) in der Regel auch die dem Fachmann bekannten für Aminoplaste im allgemeinen eingesetzten und üblicherweise als Härter bezeichneten Substanzen, wie Ammoniumsulfat oder Ammoniumnitrat oder anorganische oder organische Säuren, zum Beispiel Schwefelsäure, Ameisensäure, oder säureregenerierende Substanzen, wie Aluminiumchlorid, Aluminiumsulfat, jeweils in den üblichen, geringen Mengen, beispielsweise im Bereich von 0,1 Gew.-% bis 6 Gew.-%, bezogen auf die Gesamtmenge an Aminoplastharz im Bindemittel (a).

Als Formaldehydharz werden hier Polykondensationsprodukte aus Verbindungen mit mindestes einer, gegebenenfalls teilweise mit organischen Resten substituierten, Carbamidgruppe (die Carbamidgruppe wird auch Carboxamidgruppe genannt) und einem Aldehyd, vorzugsweise Formaldehyd, verstanden; diese Harze werden auch Aminoplastharze genannt. Als Formaldehydharze werden hierin weiterhin Phenol-Formaldehyd-Harze (PF-Harze) verstanden.

Als gut geeignetes Formaldehydharz können alle dem Fachmann, vorzugsweise die für die Herstellung von Holzwerkstoffen bekannten, Formaldehydharze verwendet werden. Derartige Harze sowie ihre Herstellung sind beispielsweise in Ullmanns Enzyklopädie der technischen Chemie, 4., neubearbeitete und erweiterte Auflage, Verlag Chemie, 1973, Seiten 403 bis 424 "Aminoplaste" und Ullmann's Encyclopedia of Industrial Chemistry, Vol. A2, VCH Verlagsgesellschaft, 1985, Seiten 115 bis 141 "Amino Resins" sowie in M. Dunky, P. Niemz, Holzwerkstoffe und Leime, Springer 2002, Seiten 251 bis 259 (UF-Harze) und Seiten 303 bis 313 (MUF und UF mit geringer Menge Melamin, letztere auch als melaminverstärkte UF-Harze (UFm) bekannt) beschrieben. Auch Phenol-Formaldehyd-Harze (PF-Harze) sind gut geeignete Formaldehydharze.

Bevorzugte Formaldehydharze sind Polykondensationsprodukte aus Verbindungen mit mindestes einer, auch teilweise mit organischen Resten substituierten, Carbamidgruppe und Formaldehyd.

Besonders bevorzugte Formaldehydharze sind Harnstoff-Formaldehydharze (UF-Harze), Melamin-Formaldehydharze (MF-Harze) oder melaminhaltige Harnstoff-Formaldehydharze (MUF-Harze und UFm-Harze) sowie Melamin-Harnstoff-Phenol-Formaldehydharze (MUPF-Harze).

Ganz besonders bevorzugte Formaldehydharze sind Harnstoff-Formaldehyd-Harze (UF-Harze), und Melamin-Formaldehyd-Harze (MUF-Harze und UFm-Harze), beispielsweise Kaurit^{®} oder Kauramin^{®} Leim-Typen der Firma BASF SE.

Neben den beschriebenen konventionellen Formaldehydharzen mit einem recht hohen molaren Formaldehyd : Aminogruppenverhältnis können auch Formaldehydharze mit geringerem molaren Formaldehyd : Aminogruppenverhältnis eingesetzt werden.

Derartige geeignete Formaldehydharze, insbesondere Aminoplastharze, sind Polykondensationsprodukte aus Verbindungen mit mindestes einer, auch teilweise mit organischen Resten substituierten, Aminogruppe und Aldehyd, worin das molare Verhältnis Aldehyd : gegebenenfalls teilweise mit organischen Resten substituierten Amino-Gruppe im Bereich von 0,3 bis 1,0, bevorzugt 0,3 bis 0,6, besonders bevorzugt 0,4 bis 0,5 liegt.

Weitere derartige geeignete Formaldehydharze, insbesondere Aminoplastharze, sind Polykondensationsprodukte aus Verbindungen mit mindestes einer Aminogruppe -NH₂ und Formaldehyd, worin das molare Verhältnis Formaldehyd : -NH₂-Gruppe im Bereich von 0,3 bis 1,0, bevorzugt 0,3 bis 0,6, besonders bevorzugt 0,4 bis 0,5 liegt.

Weitere derartige geeignete Formaldehydharze, insbesondere Aminoplastharze, sind Harnstoff-Formaldehyd-Harze (UF-Harze) oder melaminhaltige Harnstoff-Formaldehyd-Harze (MUF-Harze und UFm-Harze), worin das molare Verhältnis Formaldehyd : -NH₂-Gruppe im Bereich von 0,3 bis 1,0, bevorzugt 0,3 bis 0,6, besonders bevorzugt 0,4 bis 0,5 liegt.

Weitere derartige geeignete Formaldehydharze, insbesondere Aminoplastharze, sind Harnstoff-Formaldehyd-Harze (UF-Harze), worin das molare Verhältnis Formaldehyd : -NH₂-Gruppe im Bereich von 0,3 bis 1,0, bevorzugt 0,3 bis 0,6, besonders bevorzugt 0,4 bis 0,5 liegt.

Die oben genannten konventionellen und formaldehydärmeren Formaldehydharze, insbesondere Aminoplastharze, werden üblicherweise in flüssiger Form, meist in einem flüssigen Suspendiermittel suspendiert, vorzugsweise in wässriger Suspension, eingesetzt, können aber auch als Feststoff eingesetzt werden.

Der Feststoffgehalt der Formaldehydharz-Suspensionen, vorzugsweise wässrigen Suspension, liegt üblicherweise bei 25 bis 90 Gew.-%, vorzugsweise bei 50 bis 70 Gew.-%.

Der Feststoffgehalt eines Aminoplast-Harzes als Vertreter von Formaldehydharzen in wässriger Suspension kann zum Beispiel nach Günter Zeppenfeld, Dirk Grunwald, Klebstoffe in der Holz- und Möbelindustrie, 2. Auflage, DRW-Verlag, Seite 268 bestimmt werden. Zur Bestimmung des Feststoffgehalts von Aminoplast-Leimen wird 1 g Aminoplast-Leim in eine Wägeschale genau eingewogen, am Boden fein verteilt und 2 Stunden bei 120 °C in einem Trockenschrank getrocknet. Nach Temperierung auf Raumtemperatur in einem Exsikkator wird der Rückstand gewogen und als prozentualer Anteil der Einwaage berechnet.

Die Aminoplastharze werden nach bekannten Verfahren (siehe oben angegebene Ullmann-Literatur "Aminoplaste" und "Amino Resins", sowie oben angegebene Literatur Dunky et al.) durch Umsetzen der Carbamidgruppen-haltigen Verbindungen, vorzugsweise Harnstoff und/oder Melamin, mit den Aldehyden, vorzugsweise Formaldehyd, in den gewünschten Molverhältnissen Carbamidgruppe : Aldehyd, vorzugsweise in Wasser als Lösungsmittel, hergestellt.

Das Einstellen des gewünschten molaren Verhältnisses Aldehyd, vorzugsweise Formaldehyd : gegebenenfalls teilweise mit organischen Resten substituierten Amino-Gruppe kann auch durch Zusatz von -NH₂-Gruppen-tragenden Monomeren zu formaldehydreicheren fertigen, vorzugsweise kommerziellen, Aminoplastharzen geschehen. NH2-Gruppen-tragende Monomere sind vorzugsweise Harnstoff, Melamin, besonders bevorzugt Harnstoff.

Eine fakultative Komponente des Bindemittels (a) (im folgenden (a2) genannt) und eine obligatorische Komponente des Bindemittles (b) (im folgenden (II) genannt) ist ein organisches Isocyanat mit mindestens zwei Isocyanatgruppen.

Als gut geeignetes organisches Isocyanat (a2) und/oder (II) können alle dem Fachmann, vorzugsweise die für die Herstellung von Holzwerkstoffen oder Polyurethanen bekannten, organischen Isocyanate verwendet werden. Derartige organische Isocyanate sowie ihre Herstellung und Anwendung sind beispielsweise in Becker/Braun, Kunststoff Handbuch, 3. neubearbeitete Auflage, Band 7 "Polyurethane", Hanser 1993, Seiten 17 bis 21, Seiten 76 bis 88 und Seiten 665 bis 671 beschrieben.

Bevorzugte organische Isocyanate (a2) und/oder (II) sind oligomere Isocyanate mit 2 bis 10, vorzugsweise 2 bis 8 Monomereinheiten und im Mittel mindestens einer Isocyanatgruppe pro Monomereinheit.

Ein besonders bevorzugtes organisches Isocyanat (a2) und/oder (II) ist das oligomere organische Isocyanat PMDI ("Polymeres Methylendiphenylendiisocyanat") das erhältlich ist durch Kondensation von Formaldehyd mit Anilin und Phosgenierung der bei der Kondensation entstanden Isomeren und Oligomeren (siehe zum Beispiel Becker/Braun, Kunststoff Handbuch, 3. neubearbeitete Auflage, Band 7 "Polyurethane", Hanser 1993, Seiten 18 letzter Absatz bis Seite 19, zweiter Absatz und Seite 76, fünfter Absatz).

Das organische Isocyanat (a2) und/oder (II) kann auch in wässrig emulgierbarer Form vorliegen, wie beispielsweise durch (i) Zusatz von Emulgatoren, zum Beispiel Polyethylenglykole, Leim, Polyvinylpyrrolidon, Polyacrylamide oder (ii) durch Modifizierung mit monofunktionellen Polyethylenoxidderivaten oder durch Zusatz von Phosphor- oder Sulfonsäuren erhältlich.

Im Sinne der vorliegenden Erfindung sehr gut geeignete PMDI-Produkte (a2) und/oder (II) sind die Produkte der LUPRANAT^{®}-Typenreihe der BASF SE, insbesondere LUPRANAT^{®} M 20 FB der BASF Polyurethanes GmbH oder die wässrig emulgierbare Form der ELASTAN®-Typenreihe der BASF Polyurethanes GmbH.

Es können auch Mischungen der beschriebenen organischen Isocyanate eingesetzt werden, wobei das Mischungsverhältnis nach derzeitigem Kenntnisstand nicht kritisch ist.

Das Bindemittel (a) kann die Komponenten (a1) und (a2) in allen beliebigen Mischungsverhältnissen oder auch alleine enthalten.

In einer bevorzugten Ausführungsform enthält das Bindemittel (a) lediglich die Komponente (a1), vorzugsweise ein Aminoplastharz, besonders bevorzugt ein UF-Harz und/oder MUF-Harz und/oder UFm-Harz.

In einer weiteren bevorzugten Ausführungsform enthält das Bindemittel (a) lediglich die Komponente (a2), bevorzugt PMDI.

In einer weiteren bevorzugten Ausführungsform enthält das Bindemittel (a) die Komponente (a1), vorzugsweise ein Aminoplast, besonders bevorzugt ein UF-Harz und/oder UFm-Harz und/oder MUF-Harz im Bereich von 70 bis 99,9 Gew.-% und die Komponente (a2), bevorzugt PMDI, im Bereich von 0,1 bis 30 Gew.%, jeweils bezogen auf die Summe (a1) und (a2) der reinen unverdünnten Substanzen.

In einer ganz besonders bevorzugten Ausführungsform enthält das Bindemittel (a) ein UF-Harz im Bereich von 70 bis 99,9 Gew.-% und PMDI im Bereich von 0,1 bis 30 Gew.%, jeweils bezogen auf die Summe (a1) und (a2) der reinen, unverdünnten Substanzen.

Die Bindemittel (a1) und (a2) können bereits vermischt angewendet werden, es ist aber auch möglich, die Bindemittel (a1) und (a2), in der Regel zunächst unvermischt, üblicherweise in separaten Schritten mit den lignocellulosehaltigen Partikeln in Berührung zu bringen.

Die Gesamtmenge des Bindemittels (a1), vorzugsweise des UF-Harzes, als reine, unverdünnte Substanz, bezogen auf die Trockenmasse der lignocellulosehaltigen Partikel, vorzugsweise Holzpartikel, liegt im Bereich von 3 bis 50 Gew.-%, vorzugsweise 5 bis 15 Gew.-%, besonders bevorzugt 6 bis 12 Gew.-%.

Die Gesamtmenge des Bindemittels (a2), vorzugsweise des PMDI, als reine, unverdünnte Substanz, bezogen auf die Trockenmasse der lignocellulosehaltigen Partikel, vorzugsweise Holzpartikel, liegt im Bereich von 0,5 bis 30 Gew.-%, vorzugsweise 1 bis 10 Gew.-%, besonders bevorzugt 2 bis 6 Gew.-%.

Für den Fall, dass sich das Bindemittel (a) aus (a1) und (a2) zusammensetzt, liegt die Gesamtmenge des Bindemittels (a), als reine unverdünnte Substanz, bezogen auf die Trockenmasse der lignocellulosehaltigen Partikel, vorzugsweise Holzpartikel, im Bereich von 0,5 bis 30 Gew.-%, vorzugsweise 1 bis 15 Gew.-%, besonders bevorzugt 2 bis 12 Gew.-%.

Das Bindemittel (b) enthält:

Eine wässrige Komponente (I) enthaltend
(i) ein Polymer A, welches aus folgenden Monomeren aufgebaut ist:
   a) 70 bis 100 Gew.-% wenigstens einer ethylenisch ungesättigten Mono- und/oder Dicarbonsäure (Monomer(e) A1) und
   b) 0 bis 30 Gew.-% wenigstens eines weiteren ethylenisch ungesättigten Monomeren, welches sich von den Monomeren A1 unterscheidet (Monomer(e) A2),
   gegebenenfalls
(ii) einen niedermolekularen Vernetzer mit mindestens zwei funktionellen Gruppen welche ausgewählt sind aus der Gruppe Hydroxy, Carbonsäure und deren Derivate, primäres, sekundäres und tertiäres Amin, Epoxy, Aldehyd,
   ein organisches Isocyanat mit mindestens zwei Isocyanatgruppen als Komponente (II) so wie oben beschrieben
   und gegebenenfalls eine Komponente (III) als wässrige Dispersion, enthaltend ein oder mehrere Polymer(e) M, welches aus folgenden Monomeren aufgebaut ist:
   a) 0 bis 50 Gew.-% wenigstens eines ethylenisch ungesättigten Monomeren, welches wenigstens eine Epoxid- und/oder wenigstens eine Hydroxyalkylgruppe enthält (Monomer(e) M1), und
   b) 50 bis 100 Gew.-% wenigstens eines weiteren ethylenisch ungesättigten Monomeren, welches sich von den Monomeren M1 unterscheidet (Monomer(e) M2)
sowie gegebenenfalls übliche Additive als Komponente (IV),
und gegebenenfalls enthält das Bindemittel (b) einen Formaldehydfänger.

Das Polymer A ist aus folgenden Monomeren aufgebaut:
a) 70 bis 100 Gew.-% wenigstens einer ethylenisch ungesättigten Mono- und/oder Dicarbonsäure (Monomer(e) A1) und
b) 0 bis 30 Gew.-% wenigstens eines weiteren ethylenisch ungesättigten Monomeren, welches sich von den Monomeren A1 unterscheidet (Monomer(e) A2).

Die Herstellung von Polymeren A ist dem Fachmann geläufig und erfolgt insbesondere durch radikalisch initiierte Lösungspolymerisation beispielsweise in Wasser oder in einem organischen Lösungsmittel (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988).

Als Monomere A1 kommen insbesondere 3 bis 6 C-Atome aufweisende a,β-mono-ethylenisch ungesättigte Mono- und Dicarbonsäuren, deren mögliche Anhydride sowie deren wasserlöslichen Salze, insbesondere deren Alkalimetallsalze, wie beispielsweise Acrylsäure, Methacrylsäure, Maleinsäure, Fumarsäure, Itaconsäure, Citraconsäure, Tetrahydrophthalsäure, bzw. deren Anhydride, wie beispielsweise Maleinsäureanhydrid, sowie die Natrium- oder Kaliumsalze der vorgenannten Säuren in Betracht. Besonders bevorzugt sind Acrylsäure, Methacrylsäure und/oder Maleinsäureanhydrid, wobei Acrylsäure und die Zweier-Kombinationen aus Acrylsäure und Maleinsäureanhydrid oder Acrylsäure und Maleinsäure insbesondere bevorzugt sind.

Als Monomer(e) A2 kommen in einfacher Weise mit Monomer(en) A1 radikalisch copolymerisierbare ethylenisch ungesättigte Verbindungen in Betracht, beispielsweise Ethylen, C₃-C₂₄-α-Olefine, wie Propen, 1-Hexen, 1-Octen, 1-Decen; vinylaromatische Monomere, wie Styrol, α-Methylstyrol, o-Chlorstyrol oder Vinyl-toluole; Vinylhalogenide, wie Vinylchlorid oder Vinylidenchlorid; Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat; Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, - iso-butyl-, pentyl-, -hexyl-, -heptyl-, -octyl-, -nonyl-, -decyl- und -2-ethylhexylester, Fumar- und Maleinsäuredimethylester oder-di-n-butylester; Nitrile α,β-monoethylenisch ungesättigter Carbonsäuren, wie Acrylnitril, Methacrylnitril, Fumarsäuredinitril, Maleinsäuredinitril sowie C₄₋₈-konjugierte Diene, wie 1,3-Butadien (Butadien) und Isopren. Die genannten Monomere bilden in der Regel die Hauptmonomeren, die, bezogen auf die Gesamtmenge an Monomeren A2, einen Anteil von ≥ 50 Gew.-%, bevorzugt ≥ 80 Gew.-% und insbesondere bevorzugt ≥ 90 Gew.-% auf sich vereinen oder sogar die Gesamtmenge der Monomeren A2 bilden. In aller Regel weisen diese Monomeren in Wasser bei Normalbedingungen (20 °C, 1 atm (absolut)) lediglich eine mäßige bis geringe Löslichkeit auf.

Weitere Monomere A2, die allerdings unter den vorgenannten Bedingungen eine erhöhte Wasserlöslichkeit aufweisen, sind solche, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid; ferner Vinylsulfonsäure, 2-Acrylamido-2-methylpropan-sulfonsäure, Styrolsulfonsäure und deren wasserlösliche Salze sowie N-Vinylpyrroli-don; 2-Vinylpyridin, 4-Vinylpyridin; 2-Vinylimidazol; 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat.

Üblicherweise sind die vorgenannten wasserlöslichen Monomeren A2 lediglich als modifizierende Monomere in Mengen von ≤ 10 Gew.-%, bevorzugt ≤ 5 Gew.-% und insbesondere bevorzugt ≤ 3 Gew.-%, bezogen auf die Gesamtmenge an Monomeren A2, enthalten.

Weitere Monomere A2, die üblicherweise die innere Festigkeit der Verfilmungen einer Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldi-acrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldi-methacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure-und Acrylsäure-C₁-C₈-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat.

Häufig werden die vorgenannten vernetzenden Monomeren A2 in Mengen von ≤ 10 zu Gew.-%, bevorzugt jedoch in Mengen von ≤ 5 Gew.-%, jeweils bezogen auf die Gesamtmenge an Monomeren A2, eingesetzt. Insbesondere bevorzugt werden jedoch keinerlei derartige vernetzende Monomeren A2 zu Herstellung des Polymers A eingesetzt.

Erfindungsgemäß vorteilhaft beträgt der einpolymerisierte Anteil an Monomeren A2 im Polymer A ≤ 10 Gew.-% oder ≤ 5 Gew.-%.

Insbesondere vorteilhaft enthält das Polymer A keinerlei Monomeren A2 einpolymerisiert.

Bevorzugte Polymere A sind erhältlich durch radikalisch initiierte Lösungspolymerisation lediglich von Monomeren A1, besonders bevorzugt von 65 bis 100 Gew.-%, ganz besonders bevorzugt von 70 bis 90 Gew.-% Acrylsäure mit besonders bevorzugt 0 bis 35 Gew.-%, ganz besonders bevorzugt 10 bis 30 Gew.-% Maleinsäure oder Maleinsäureanhydrid.

Vorteilhaft weist Polymer A ein gewichtsmittleres Molekulargewicht Mw im Bereich von 1000 g/mol bis 500000 g/mol, bevorzugt 10000 g/mol bis 300000 g/mol, besonders bevorzugt 30000 g/mol bis 120000 g/mol auf.

Die Einstellung des gewichtsmittleren Molekulargewichts Mw bei der Herstellung von Polymer A ist dem Fachmann geläufig und erfolgt vorteilhaft durch radikalisch initiierte wässrige Lösungspolymerisation in Anwesenheit von radikalkettenübertragenden Verbindungen, den sogenannten Radikalkettenreglern. Auch die Bestimmung des gewichtsmittleren Molekulargewichts Mw ist dem Fachmann geläufig und erfolgt beispielsweise mittels Gelpermeationschromatograpie.

Gut geeignete Handelsprodukte für Polymere A sind zum Beispiel die Sokalan®-Produkte der BASF SE, welche beispielsweise auf Acrylsäure und/oder Maleinsäure basieren. Weitere geeignete Polymere sind in WO 99/ 02591 A beschrieben.

Gegebenenfalls enthält die Komponente (I) einen niedermolekularen Vernetzer (ii) mit mindestens zwei funktionellen Gruppen welche ausgewählt sind aus der Gruppe Hydroxy, Carbonsäure und deren Derivate, primäres, sekundäres und tertiäres Amin, Epoxy, Aldehyd.

Gut geeignete derartige Vernetzer sind solche mit einem (gewichtsmittleren) Molekulargewicht im Bereich von 30 bis 10000 g/mol. Beispielhaft seien genannt: Alkanolamine, wie Triethanolamin; Carbonsäuren, wie Zitronensäure, Weinsäure, Butanteracarbonsäure; Alkohole, wie Glucose, Saccharose oder andere Zucker, Glycerin, Glycol, Sorbitol, Trimethylolpropan; Epoxide, wie Bisphenol-A oder Bisphenol-F sowie darauf basierende Harze und weiterhin Polyalkylenoxid-Glycidylether oder Trimethylolpropan-Triglycidylether. In einer bevorzugten Ausführungsform der Erfindung liegt das Molekulargewicht des verwendeten niedermolekularen Vernetzers (ii) im Bereich von 30 bis 4000 g/mol, besonders bevorzugt im Bereich von 30 bis 500 g/mol.

Polymer M ist aus folgenden Monomeren aufgebaut:
a) 0 bis 50 Gew.-% wenigstens eines ethylenisch ungesättigten Monomeren, welches wenigstens eine Epoxid- und/oder wenigstens eine Hydroxyalkylgruppe enthält (Monomer(e) M1), und
b) 50 bis 100 Gew.-% wenigstens eines weiteren ethylenisch ungesättigten Monomeren, welches sich von den Monomeren M1 unterscheidet (Monomer(e) M2).

Polymer M ist durch radikalisch initiierte Emulsionspolymerisation in einem wässrigen Medium der entsprechenden Monomeren M1 und/oder M2 erhältlich. Polymer M kann einphasig oder mehrphasig vorliegen, kann einen Kern/Schale-Aufbau haben.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt (siehe zum Beispiel: Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthe-tischer Hochpolymerer, F. Hölscher, Springer-Verlag, Berlin (1969)).

Die radikalisch initiierte wässrige Emulsionspolymerisationsreaktionen erfolgen üblicherweise so, dass man die ethylenisch ungesättigten Monomere unter Mitverwendung von Dispergierhilfsmitteln, im wässrigen Medium in Form von Monomerentröpfchen dispers verteilt und mittels eines radikalischen Polymerisationsinitiators polymerisiert.

Als Monomer(e) M1 kommen insbesondere Glycidylacrylat und/oder Glycidylmethacrylat sowie Hydroxyalkylacrylate und -methacrylate mit C2- bis C10-Hydroxyalkyl-gruppen, insbesondere C2- bis C4-Hydroxyalkylgruppen und bevorzugt C2- und C3-Hydroxyalkylgruppen in Betracht, zum Beispiel 2-Hydroxyethylacrylat, 2-Hydroxyethyl-methacrylat, 3-Hydroxypropylacrylat, 3-Hydroxypropylmethacrylat, 4-Hydroxybutyl-acrylat und/oder 4-Hydroxybutylmethacrylat. Mit besonderem Vorteil werden eines oder mehrere, vorzugsweise eines oder zwei, der folgenden Monomere M1 eingesetzt: 2-Hydroxyethylacrylat, 2-Hydroxyethylmethacrylat, Glycidylacrylat, Glycidylmethacrylat.

Erfindungsgemäß ist es möglich, gegebenenfalls eine Teil- oder die Gesamtmenge an Monomeren M1 im Polymerisationsgefäß vorzulegen. Es ist aber auch möglich, die Gesamtmenge oder die gegebenenfalls verbliebene Restmenge an Monomeren M1 während der Polymerisationsreaktion zuzudosieren. Die Gesamtmenge oder die gegebenenfalls verbliebene Restmenge an Monomeren M1 kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren M1 während der Polymerisationsreaktion kontinuierlich mit gleichbleibenden Mengenströmen, insbesondere als Bestandteil einer wässrigen Monomerenemulsion.

Als Monomer(e) M2 kommen insbesondere in einfacher Weise mit Monomer(en) M1 radikalisch copolymerisierbare ethylenisch ungesättigte Verbindungen in Betracht, beispielsweise Ethylen; vinylaromatische Monomere, wie Styrol, α-Methylstyrol, o-Chlor-styrol oder Vinyltoluole; Vinylhalogenide, wie Vinylchlorid oder Vinylidenchlorid; Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat; Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, - decyl- und -2-ethylhexylester, Fumar- und Maleinsäuredimethylester oder -di-n-butylester; Nitrile α,β-monoethylenisch ungesättigter Carbonsäuren, wie Acrylnitril, Methacrylnitril, Fumarsäuredinitril, Maleinsäuredinitril sowie C4-8-konjugierte Diene, wie 1,3-Butadien (Butadien) und I-sopren. Die genannten Monomere bilden in der Regel die Hauptmonomeren, die, bezogen auf die Gesamtmenge an Monomeren M2, einen Anteil von ≥ 50 Gew.-%, bevorzugt ≥ 80 Gew.-% und insbesondere ≥ 90 Gew.-% auf sich vereinen. In aller Regel weisen diese Monomeren in Wasser bei Normalbedingungen (20 °C, 1 atm (absolut)) lediglich eine mäßige bis geringe Löslichkeit auf.

Monomere M2, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien 3 bis 6 C-Atome aufweisende α,β-monoethylenisch ungesättigte Mono-und Dicarbonsäuren und deren Amide, wie z. B. Acrylsäure, Methacrylsäure, Maleinsäure, Fumarsäure, Itaconsäure, Acrylamid und Methacrylamid; ferner Vinylsulfonsäure, 2-Acrylamido-2-methylpropansulfonsäure, Styrolsulfonsäure und deren wasserlösliche Salze sowie N-Vinylpyrrolidon, 2-Vinyl-pyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethyl-amino)ethylmethacrylat, 2-(N-tert.-Butylamino)ethylmethacrylat, N-(3-N',N'-Dimethyl-aminopropyl)methacrylamid, 2-(1-Imidazolin-2-onyl)ethylmethacrylat und Ureidomethacrylat. Im Normalfall sind die vorgenannten wasserlöslichen Monomeren M2 lediglich als modifizierende Monomere in Mengen von ≤ 10 Gew.-%, bevorzugt
≤ 5 Gew.-% und insbesondere bevorzugt ≤ 3 Gew.-%, bezogen auf die Gesamtmenge an Monomeren M2, enthalten.

Monomere M2, die üblicherweise die innere Festigkeit der Verfilmungen einer Polymermatrix erhöhen, weisen normalerweise wenigstens eine N-Methylol- oder Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethy-lenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimeth-acrylate, wie Ethylenglykoldiacrylat, 1,2-Propylenglykoldiacrylat, 1,3-Propylenglykol-diacrylat, 1,3-Butylenglykoldiacrylat, 1,4-Butylenglykoldiacrylate und Ethylengly-koldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacryla-mid, Cyclopentadienylacrylat, Triallylcyanurat oder Triallylisocyanurat. In diesem Zusammenhang auch von Bedeutung sind Verbindungen, wie Diacetonacrylamid und Acetylacetoxyethylacrylat bzw. -methacrylat. Häufig werden die vorgenannten vernetzenden Monomeren M2 in Mengen von ≤ 10 zu Gew.-%, bevorzugt in Mengen von ≤ 5 Gew.-% und insbesondere bevorzugt in Mengen von ≤ 3 Gew.-%, jeweils bezogen auf die Gesamtmenge an Monomeren A2, eingesetzt. Häufig werden jedoch keinerlei derartige vernetzende Monomeren M2 verwendet.

Erfindungsgemäß ist es möglich, gegebenenfalls eine Teil- oder die Gesamtmenge an Monomeren M2 im Polymerisationsgefäß vorzulegen. Es ist aber auch möglich, die Gesamtmenge oder die gegebenenfalls verbliebene Restmenge an Monomeren M2 während der Polymerisationsreaktion zuzudosieren. Die Gesamtmenge oder die gegebenenfalls verbliebene Restmenge an Monomeren M2 kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren M2 während der Polymerisationsreaktion kontinuierlich mit gleichbleibenden Mengenströmen, insbesondere als Bestandteil einer wässrigen Monomerenemulsion.

Zur Herstellung der wässrigen Dispersion der Komponente (II) werden häufig Dispergierhilfsmittel mitverwendet, die sowohl die Monomerentröpfchen als auch die durch die radikalisch initiierte Polymerisation erhaltenen Polymerteilchen in der wässrigen Phase dispers verteilt halten und so die Stabilität der erzeugten wässrigen Polymerzusammensetzung gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinyl-pyrrolidon- oder Acrylsäureenthaltende Copolymerisate, beispielsweise solche die hierin als Komponente I(i) definiert sind. Eine ausführliche Beschreibung weiterer geeigneter Schutzkol-loide findet sich in Houben-Weyl, Methoden der organischen Chemie, Band XIV/1, Makromolekulare Stoffe, Seiten 411 bis 420, Georg-Thieme-Verlag, Stuttgart, 1961.

Selbstverständlich können auch Gemische aus Emulgatoren und/oder Schutzkolloiden verwendet werden. Häufig werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z. B. ethoxilierte Mono-, Di- und Tri-Alkylphenole (EO-Grad: 3 bis 50, Alkylrest: C₄ bis C₁₂), ethoxilierte Fettalkohole (EO-Grad: 3 bis 50; Alkylrest: C₈ bis C₃₆) sowie Alkalimetall- und Ammoniumsalze von Alkylsulfaten (Alkylrest: C₈ bis C₁₂), von Schwefelsäurehalbestern ethoxylierter Alkanole (EO-Grad: 3 bis 30, Alkylrest: C₁₂ bis C₁₈) und ethoxilierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Bevorzugt werden für das erfindungsgemäße Verfahren nichtionische und/oder anionische Emulgatoren verwendet.

In der Regel beträgt die Menge an eingesetztem Dispergierhilfsmittel, insbesondere Emulgatoren, 0,1 bis 5 Gew.-%, bevorzugt 1 bis 3 Gew.-%, jeweils bezogen auf die Gesamtmenge des Monomerengemisches M. Für den Fall, dass Schutzkolloide als alleinige Dispergierhilfsmittel verwendet werden, liegt die eingesetzte Menge deutlich höher; man verwendet üblicherweise 5 bis 40 Gew.-% Dispergierhilfsmittel, bevorzugt 10 bis 30 Gew.-%, jeweils bezogen auf die Gesamtmenge des Monomerengemisches M.

Erfindungsgemäß ist es möglich, gegebenenfalls eine Teil- oder die Gesamtmenge an Dispergierhilfsmittel im Polymerisationsgefäß vorzulegen. Es ist aber auch möglich, die Gesamtmenge oder die gegebenenfalls verbliebene Restmenge an Dispergierhilfsmittel während der Polymerisationsreaktion zuzudosieren. Die Gesamtmenge oder die gegebenenfalls verbliebene Restmenge an Dispergierhilfsmittel kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Dispergierhilfsmittel während der Polymerisationsreaktion kontinuierlich mit gleichbleibenden Mengenströmen, insbesondere als Bestandteil einer wässrigen Monomerenemulsion.

Bevorzugte Polymere M enthalten a) 0,01 bis 50 Gew.-% wenigstens eines ethylenisch ungesättigten Monomeren, welches wenigstens eine Epoxid- und/oder wenigstens eine Hydroxyalkylgruppe enthält (Monomer(e) M1) und b) 50 bis 99,99 Gew.-% wenigstens eines weiteren ethylenisch ungesättigten Monomeren, welches sich von den Monomeren M1 unterscheidet (Monomer(e) M2).

Besonders bevorzugte derartige Polymere M sind erhältlich durch radikalisch initiierte Lösungspolymersiation von 10 bis 30 Gew.-%, vorzugsweise 15 bis 22 Gew.-% Acrylsäure-und/oder Methacrylsäureestern mit C1-8-Alkoholen - vorzugsweise Methanol, n-Butanol, 2-Ethylhexanol - mit 40 bis 70 Gew.-%, vorzugsweise 55 bis 65 Gew.-% Styrol und von 5 bis 50 Gew.-%, vorzugsweise 20 bis 30 Gew.-% 2-Hydroxyethyl-acrylat und/oder 2-Hydroxyethylmethacrylat und/oder Glycidylacrylat und/oder Glycidylmethacrylat, wobei die Summe der Komponenten 100 Gew.-% ergibt.

Weitere bevorzugte Polymere M enthalten kein(e) Monomer(e) M1 und sind erhältlich durch radikalisch initiierte Lösungspolymersiation von 80 bis 99 Gew.-%, vorzugsweise 85 bis 95 Gew.-% Acrylsäureestern und/oder Methacrylsäureestern mit C1-8-Alkoholen - -vorzugsweise Methanol, n-Butanol, 2-Ethylhexanol - mit 0 bis 5 Gew.-%, vorzugsweise 1 bis 3 Gew.-% Ureidomethacrylat und von 0,5 bis 5 Gew.-%, vorzugsweise 1 bis 4 Gew.-% 3 bis 6 C-Atome aufweisende α,β-monoethylenisch ungesättigte Mono- und Dicarbonsäuren - vorzugsweise Acrylsäure, Methacrylsäure - und/oder Amiden dieser Säuren, wobei die Summe der Komponenten 100 Gew.-% ergibt.

Weitere bevorzugte Polymere M sind erhältlich durch Verwendung von Dispergierhilfsmitteln auf Basis von Poly(acrylsäure)n, wie sie in EP 1240205 A oder DE19991049592 A beschrieben sind.

Bevorzugt haben derartige Polymere einen Kern/Schale-Aufbau (isotrope Verteilung der Phasen, zum Beispiel zwiebelschalenförmig) oder einen Janus-Aufbau (anisotrope Verteilung der Phasen).

Durch gezielte Variation von Art und Menge der Monomeren M1 und M2 ist es dem Fachmann erfindungsgemäß möglich, wässrige Polymerzusammensetzungen herzustellen, deren Polymere M eine Glasübergangstemperatur T_{g} bzw. einen Schmelzpunkt im Bereich von -60 bis 270 °C aufweisen.

Vorteilhaft liegt die Glasübergangstemperatur T_{g} des Polymeren M im Bereich von 10°C bis 120 °C und bevorzugt im Bereich von 30 °C bis 90 °C.

Mit der Glasübergangstemperatur T_{g}, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur bzw. der Schmelzpunkt wird nach dem DSC-Verfahren ermittelt (Differential Scanning Calorimetry, 20 K/min, midpoint-Messung, DIN 53765).

Die Tg-Werte für die Homopolymerisate der meisten Monomeren sind bekannt und z. B. in Ull-mann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die erfindungsgemäßen Komponenten (I) und (III) weisen üblicherweise Polymerfeststoffgehal-te (Gesamtmenge an Polymer A oder Gesamtmenge an Polymer M) von ≥ 10 und ≤ 70 Gew.-%, häufig ≥ 20 und ≤ 65 Gew.-% und oft ≥ 40 und ≤ 60 Gew.-%, bezogen auf die jeweilige wässrige Komponente (I) oder (II), auf.

Der über quasielastische Lichtstreuung (ISO-Norm 13321) ermittelte zahlenmittlere Teilchendurchmesser (cumulant z-average) des Polymeres M in der der wässrigen Komponente (III) liegt in der Regel zwischen 10 und 2000 nm, häufig zwischen 20 und 1000 nm und oft zwischen 50 und 700 nm bzw. 80 bis 400 nm.

Die Komponenten des Bindemittels (b), vorzugsweise die Komponenten (I) und (III), können bereits vermischt angewendet werden, es ist aber auch möglich die Komponenten des Bindemittel (b), in der Regel zunächst unvermischt, üblicherweise in separaten Schritten, mit den lignocellulosehaltigen Partikeln in Berührung zu bringen.

Die Gesamtmenge der Komponenten (I) und (III) des Bindemittels (b) als reine, unverdünnte Substanz, bezogen auf die Trockenmasse der lignocellulosehaltigen Partikel, vorzugsweise Holzpartikel, liegt im Bereich von 0,5 bis 50 Gew.-%, vorzugsweise 0,75 bis 12 Gew.-%, besonders bevorzugt 1 bis 6 Gew.-%.

Die Gesamtmenge der Komponente (I) des Bindemittels (b) als reine, unverdünnte Substanz, bezogen auf die Trockenmasse der lignocellulosehaltigen Partikel, vorzugsweise Holzpartikel, liegt im Bereich von 0,5 bis 30 Gew.-%, vorzugsweise 1 bis 10 Gew.-%, besonders bevorzugt 1,5 bis 6 Gew.-%.

Die Gesamtmenge der Komponente (III) des Bindemittels (b) als reine, unverdünnte Substanz, bezogen auf die Trockenmasse der lignocellulosehaltigen Partikel, vorzugsweise Holzpartikel, liegt im Bereich von 0,5 bis 30 Gew.-%, vorzugsweise 0,75 bis 10 Gew.-%, besonders bevorzugt 1 bis 6 Gew.-%.

Das Gewichtsverhältnis der Komponente (I) : Komponente (III) des Bindemittels (b) als reine, unverdünnte Substanz, liegt im Bereich von 10 : 1 bis 1 : 10 vorzugsweise 5 : 1 bis 1 : 5 , besonders bevorzugt 3 : 1 bis 1 : 3.

Der pH-Wert des Bindemittels (b) liegt im Bereich von 0 bis 5 vorzugsweise im Bereich von 2 bis 4. Der gewünschte pH-Wert des Bindemittels B stellt sich in der Regel durch die Kombination der Komponenten (I) und (III) und gegebenenfalls Komponente (IV) und/oder Formaldehydfänger ein.

Der pH-Wert des Bindemittels (b) am Ort der Wirkung kann aber in üblicher Weise durch Zugabe von anorganischen oder organischen Säuren und/oder deren Salzen, zum Beispiel Mineralsäuren wie Schwefelsäure, Salzsäure, phosphorhaltige Säuren wie Phosphorsäure, phosphorige Säure oder unterphosphorige Säure und deren Salze, zum Beispiel Natriumphosphat, Natriumphosphit, Natriumhypophosphit; organische Sulfonsäuren wie Methansulfonsäure; Carbonsäuren wie Ameisensäure oder Essigsäure oder Natriumformiat, Natriumacetat, Natriumcitrat oder anorganischen oder organischen Basen, zum Beispiel Natriumhydoxyd (wässrig oder in Substanz), Calciumoxid oder Calciumcarbonat (jeweils wässrig oder in Substanz) oder Ammoniak, wässrig oder als Substanz auf den gewünschten Wert im Bereich von 0 bis 5 vorzugsweise im Bereich von 2 bis 4 eingestellt werden.

Im allgemeinen kann das fertig gemischte Bindemittel (b) mit den oben genannten pH-Wertbereichen eingesetzt werden. Der gewünschte pH-Wert - wie oben beschrieben - kann aber auch eingestellt werden, indem man die einzelnen Komponenten des Bindemittels (b) und die oben beschriebenen Säuren oder Basen getrennt auf das lignocellulosehaltige Substrat aufbringt. Der Fachmann kann durch Wahl der pH-Werte der Komponenten des Bindemittels (b) und der zugegebenen Säuren oder Basen diese so kombinieren, dass sich der gewünschte pH-Wert auf dem lignocellulosehaltigen Substrat einstellt.

Unter dem Begriff Additiv als Komponente (IV) sind alle dem Fachmann bekannten Additive zu verstehen, beispielsweise Wachse, Paraffinemulsion, flammhemmende Additive, Netzmittel, Salze, aber auch anorganische oder organische Säuren und Basen, zum Beispiel Mineralsäuren wie Schwefelsäure, Salpetersäure, phosphorhaltige Säuren wie Phosphorsäure, phosphorige Säure oder unterphosphorige Säure; organische Sulfonsäuren wie Methansulfonsäure; Carbonsäuren wie Ameisensäure oder Essigsäure oder anorganischen oder organischen Basen, zum Beispiel Natriumhydoxyd (wässrig oder in Substanz), Calciumoxid oder Calciumcarbonat (jeweils wässrig oder in Substanz) oder Ammoniak, wässrig oder als Substanz. Diese Additive können in einer Menge von 0 bis 20 Gew.-%, bevorzugt 0 bis 5 Gew.-%, insbesondere 0 bis 2 Gew.-%, bezogen auf die Trockenmasse der lignocellulosehaltigen Partikel, zum Beispiel absolut trockenes (atro) Holz, zugefügt werden.

Die lignocellulosehaltigen Partikel, vorzugsweise Holzpartikel, besonders bevorzugt Holzspäne- oder fasern, werden in der Regel durch in Berührung bringen mit dem Bindemittel (a) oder (b) beleimt. Derartige, sogenannte Beleimungs-Verfahren sind für die Herstellung von konventionellen Holzwerkstoffen mit üblichen Aminoplast-Harzen bekannt und beispielsweise in "Taschenbuch der Spanplatten Technik" H.-J. Deppe, K. Ernst, 4. Aufl., 2000, DRW - Verlag Weinbrenner GmbH & Co., Leinfelden-Echter-dingen, Kapitel 3.3 beschrieben.

Das Bindemittel (a) oder (b) kann auf verschiedene Arten mit den lignocellulosehaltigen Partikel, vorzugsweise Holzpartikel, besonders bevorzugt Holzspäne -oder fasern, in Berührung gebracht werden, bevorzugt durch Aufsprühen von (a) oder (b) auf die lignocellulosehaltigen Partikel.
Bei der Beleimung wird üblicherweise das Bindemittel (a) oder (b) in solchen Mengen wie oben beschrieben eingesetzt.
Im Hinblick auf das Bindemittel (b) ist es bevorzugt, dass die Komponente (II) nicht vorgemischt mit den weiteren Komponenten (I) und/oder (III) und/oder (IV) mit den lignocellulosehaltigen Partikeln in Berührung gebracht wird. Dabei kann die Komponente (II) zeitlich vor oder nach den anderen voranstehend genannten Komponenten mit den lignocellulosehaltigen Partikeln in Berührung gebracht werden.

Gegebenenfalls enthält das Bindemittel (b) einen Formaldehydfänger.
Vorzugsweise enthält das Bindemittel (b) einen Formaldehydfänger, wenn das Bindemittel (a) ein, wie oben beschriebenes, Formaldehydharz enthält.

Mit Formaldehydfänger sind chemische Substanzen gemeint, die in der Regel ein freies Elektronenpaar haben, welches mit dem Formaldehyd chemisch reagiert, also den Formaldehyd chemisch, in der Regel praktisch irreversibel, bindet. Derartige freie Elektronenpaare finden sich beispielsweise auf folgenden funktionellen Gruppen organischer oder anorganischer Verbindungen: primäre, sekundäre und tertiäre Aminogruppe, Hydroxylgruppe, Sulfitgruppe, Amide, Imide.

Gut geeignete Formaldehydfänger sind zum Beispiel: Ammoniak, Harnstoff, Melamin, organische C₁-C₁₀-Amine, Polymere die mindestens eine Aminogruppe tragen, wie Polyamine, Polyimine, Polyharnstoffe, Poly-Lysine, Polyvinylamin, Polyethylenimin. Ein besonders bevorzugter Formaldehydfänger ist Harnstoff.

Die Menge des Formaldehydfängers im Bindemittel (b) liegt im Bereich von 0,1 bis 10 Gew.-%, vorzugsweise 0,5 bis 7 Gew.-%, bezogen auf die Trockenmasse der lignocellulosehaltigen Partikel, zum Beispiel absolut trockenes (atro) Holz, und reinen, unverdünnten Formaldehydfänger.

In den erfindungsgemäßen mehrschichtigen lignocellulosehaltigen Formkörpern enthält mindestens eine Mittelschicht A) expandierte Kunststoffteilchen und gegebenenfalls enthält mindestens eine Deckschicht B) expandierte Kunststoffteilchen.
Beispielsweise enthält in einem erfindungsgemäßen dreischichtigen lignocellulosehaltigen Formkörper die Mittelschicht A) expandierte Kunststoffteilchen und gegebenenfalls enthält in diesem Falle mindestens eine Deckschicht B) expandierte Kunststoffteilchen.

Vorzugsweise enthält In den erfindungsgemäßen mehrschichtigen lignocellulosehaltigen Formkörpem mindestens eine Mittelschicht A) expandierte Kunststoffteilchen und die Deckschichten B) enthalten praktisch keine expandierte Kunststoffteilchen.
Beispielsweise enthält in einem erfindungsgemäßen dreischichtigen lignocellulosehaltigen Formkörper die Mittelschicht A) expandierte Kunststoffteilchen und in diesem Falle enthalten die Deckschichten B) praktisch keine expandierte Kunststoffteilchen.

Expandierte Kunststoffteilchen im Sinne der vorliegenden Erfindung sind poröse Teilchen von thermoplastischen oder duroplastischen Kunststoffen. Derartige expandierte Kunststoffteilchen enthalten in der Regel Zellstrukturen.

Geeignete Kunststoffe die den expandierten Kunststoffteilchen zugrunde liegen sind beispielsweise Polyketone, Polysulfone, Polyoxymethylen, PVC (hart und weich), Polycarbonate, Polyisocyanurate, Polycarbodiimide, Polyacrylimide und Polymethacrylimide, Polyamide, Polyurethane, Aminoplastharze und Phenolharze, Styrolhomopolymere (im folgenden auch als "Polystyrol" oder "Styrolpolymerisat" bezeichnet), Styrolcopolymere, C₂-C₁₀-Olefinhomopolymere, C₂-C₁₀-Olefincopolymere und Polyester. Bevorzugt verwendet man zur Herstellung der genannten Olefinpolymere die 1-Alkene, zum Beispiel Ethylen, Propylen, 1-Buten, 1-Hexen, 1-Octen.

Bevorzugt sind expandierte thermoplastische Kunststoffteilchen, wie Polyketone, Polysulfone, Polyoxymethylen, PVC (hart und weich), Polycarbonate, Polyamide, Polyurethane, Styrolhomopolymere (im folgenden auch als "Polystyrol" oder "Styrolpolymerisat" bezeichnet), Styrolcopolymere, C₂-C₁₀-Olefinhomopolymere, C₂-C₁₀-Olefincopolymere und Polyester.

Ein gut geeignetes Verfahren zur Herstellung derartiger expandierter Kunststoffteilchen, vorzugsweise expandierter thermoplastischer Kunststoffteilchen, kann wie folgt durchgeführt werden: Kompakte Kunststoffteilchen, vorzugsweise kompakte thermoplastische Kunststoffteilchen, welche ein ausdehnungsfähiges Medium (auch "Treibmittel" genannt) enthalten werden durch Einwirkung von Wärmenergie oder Druckänderung expandiert (oft auch als "aufgeschäumt" bezeichnet). Hierbei dehnt sich das Treibmittel aus, die Partikel nehmen an Größe zu und Zellstrukturen entstehen. Dieses Expandieren wird im Allgemeinen in üblichen Aufschäumvorrichtungen, oft als "Vorschäumer" bezeichnet, durchgeführt. Derartige Vorschäumer können ortsfest installiert sein oder aber mobil sein. Die Expandierung kann einstufig oder mehrstufig durchgeführt werden. In der Regel werden beim einstufigen Verfahren die expandierbaren Kunststoffteilchen ohne weiteres auf die gewünschte Endgröße expandiert. In der Regel werden beim mehrstufigen Verfahren die expandierbaren Kunststoffteilchen zunächst auf eine Zwischengröße expandiert und dann in einer oder mehreren weiteren Stufen über entsprechend viele Zwischengrößen zur gewünschten Endgröße expandiert.

Derartige expandierte Kunststoffteilchen, vorzugsweise expandierte thermoplastische Kunststoffteilchen haben üblicherweise eine Schüttdichte, von 10 bis 100 kg/m³, bevorzugt 40 bis 100 kg/m³, besonders bevorzugt 45 bis 80 kg/m³, insbesondere 50 bis 70 kg/m³.

Derartige expandierte Kunststoffteilchen, vorzugsweise expandierte thermoplastische Kunststoffteilchen werden in der Regel in Form von Kugeln oder Perlen mit einem mittleren Durchmesser im Bereich von 0,25 bis 10 mm, bevorzugt im Bereich von 1 bis 8,5 mm, insbesondere im Bereich von 1,2 bis 7 mm erhalten und verwendet.

Besonders bevorzugte expandierte thermoplastische Kunststoffteilchen werden aus Styrolhomopolymerisat (hierin auch einfach "Polystyrol" genannt) und/oder Styrolcopolymerisat erhalten; sie werden im folgenden als expandiertes Styrolpolymerisat oder expandiertes Styrolcopolymerisat bezeichnet.

Das Ausgangsmaterial Polystyrol und/oder Styrolcopolymerisat kann nach allen den Fachmann bekannten Polymerisierungsverfahren hergestellt werden, siehe z. B. Ullmann's Encyclopedia, Sixth Edition, 2000 Electronic Release oder Kunststoff-Handbuch 1996, Band 4 "Polystyrol", Seiten 567 bis 598., gut geeignet sind die Suspensionspolymerisation oder Extrusionsverfahren.

Die Herstellung des expandierbaren Polystyrols und/oder Styrolcopolymerisats erfolgt in der Regel in an sich bekannter Weise durch Suspensionspolymerisation oder mittels Extrusionsverfahren.

Bei der Suspensionspolymerisation wird Styrol, gegebenenfalls unter Zusatz weiterer Comonomere in wässriger Suspension in Gegenwart eines üblichen Suspensionsstabilisators mittels radikalbildender Katalysatoren polymerisiert. Ein Treibmittel und gegebenenfalls weitere Zusatzstoffe können dabei bei der Polymerisation mit vorgelegt werden oder im Laufe der Polymerisation oder nach beendeter Polymerisation dem Ansatz zugefügt werden. Die erhaltenen perlförmigen, mit Treibmittel imprägnierten, expandierbaren Styrolpolymerisate werden nach beendeter Polymerisation von der wässrigen Phase abgetrennt, gewaschen, getrocknet und gesiebt. Bei dem Extrusionsverfahren wird ein Treibmittel beispielsweise über einen Extruder in das Polymer eingemischt, durch eine Düsenplatte gefördert und unter Druck zu Partikeln oder Strängen granuliert.

Als Treibmittel zur Herstellung des sogenannten expandierbaren Polystyrols und/oder Styrolcopolymerisats können alle dem Fachmann bekannten und bereits oben genannten Treibmittel verwendet werden, beispielsweise aliphatische C₃- bis C₁₀-Kohlenwasserstoffe, wie Propan, n-Butan, Isobutan, n-Pentan, Isopentan, Neopentan cyclo-Pentan und/oder Hexan und dessen Isomere, Alkohole, Ketone, Ester, Ether oder halogenierte Kohlenwasserstoffe.

Bevorzugt wird das Treibmittel ausgewählt aus der Gruppe bestehend aus n-Pentan, Isopentan, Neopentan und Cyclopentan, .Besonders bevorzugt wird ein handelsübliches Pentanisomerengemisch aus n-Pentan und iso-Pentanverwendet.

Der Gehalt an Treibmittel im expandierbaren Polystyrol oder Styrolcopolymerisat liegt im Bereich von 0,01 bis 7 Gew.-%, und wenn niedrige Treibmittelgehalte gewünscht sind, im Bereich von 0,01 bis 4 Gew.-%, bevorzugt 0,1 bis 4 Gew.-%, jeweils bezogen auf das treibmittelhaltige expandierbare Polystyrol oder Styrolcopolymerisat.

Der Gehalt an C₃- bis C₁₀-Kohlenwasserstoffe als Treibmittel im expandierbaren Polystyrol oder Styrolcopolymerisat liegt im Bereich von 0,01 bis 7 Gew.-%, und wenn niedrige Treibmittelgehalte gewünscht sind, im Bereich von 0,01 bis 4 Gew.-%, bevorzugt 0,1 bis 4 Gew.-%, jeweils, bezogen auf das treibmittelhaltige expandierbare Polystyrol oder Styrolcopolymerisat.

Der Gehalt an Treibmittel, ausgewählt aus der Gruppe bestehend aus n-Pentan, Isopentan, Neopentan und Cyclopentan, im expandierbaren Polystyrol oder Styrolcopolymerisat liegt im Bereich von 0,01 bis 7 Gew.-%, und wenn niedrige Treibmittelgehalte gewünscht sind, im Bereich von 0,01 bis 4 Gew.-%, bevorzugt 0,1 bis 4 Gew.-%, jeweils, bezogen auf das treibmittelhaltige expandierbare Polystyrol oder Styrolcopolymerisat.

Der Gehalt an Treibmittel, ausgewählt aus der Gruppe bestehend aus n-Pentan, Isopentan, Neopentan und Cyclopentan, im expandierbaren Polystyrol liegt im Bereich von 0,01 bis 7 Gew.-%, und wenn niedrige Treibmittelgehalte gewünscht sind, im Bereich von 0,01 bis 4 Gew.-%, bevorzugt 0,1 bis 4 Gew.-%, bezogen auf das treibmittelhaltige expandierbare Polystyrol.

Die Styrolpolymerisate oder Styrolcopolymerisate können Additive, zum Beispiel UV-Stabilisatoren, Antioxydantien, Beschichtungsmittel, Hydrophobierungsmittel,Keimbildner, Weichmacher, Flammschutzmittel, lösliche und unlösliche anorganische und/oder organische Farbstoffe, Pigmente, und athermane Partikel, wie Ruß, Graphit oder Aluminiumpulver, enthalten.

Wie beschieben können auch Styrolcopolymerisate eingesetzt werden. Vorteilhaft weisen diese Styrolcopolymerisate mindestens 50 Gew.-%, vorzugsweise mindestens 80 Gew.-%, einpolymerisiertes Styrol auf. Als Comonomere kommen z. B. α-Methylstyrol, kernhalogenierte Styrole, Acrylnitril, Ester der Acryl- oder Methacrylsäure von Alkoholen mit 1 bis 8 C-Atomen, N-Vinylcarbazol, Maleinsäure(anhydrid), (Meth)acrylamide und/oder Vinylacetat in Betracht.

Vorteilhaft kann das Polystyrol und/oder Styrolcopolymerisat eine geringe Menge eines Kettenverzweigers einpolymerisiert enthalten, d. h. einer Verbindung mit mehr als einer, vorzugsweise zwei Doppelbindungen, wie Divinylbenzol, Butadien und/oder Butandioldiacrylat. Der Verzweiger wird im Allgemeinen in Mengen von 0,0005 bis 0,5 Mol-%, bezogen auf Styrol, verwendet.

Bevorzugt werden Styrolpolymerisate oder Styrolcopolymerisate mit einem Molekulargewicht im Bereich von 70.000 bis 400.000 g/mol, besonders bevorzugt 190.000 bis 400.000 g/mol, ganz besonders bevorzugt 210.000 bis 400.000 g/mol eingesetzt.

Auch Mischungen verschiedener Styrol(co)polymerisate können verwendet werden.

Gut geeignete Styrolhomopolymerisate oder Styrolcopolymerisate sind glasklares Polystyrol (GPPS), Schlagzähpolystyrol (HIPS), anionisch polymerisiertes Polystyrol oder Schlagzähpolystyrol (A-IPS), Styrol-α-Methylstyrol-copolymere, Acrylnitril-Butadien-Styrolpolymerisate (ABS), Styrol-Acrylnitril (SAN), Acrylnitril-Styrol-Acrylester (ASA), Methylacrylat-Butadien-Styrol (MBS), Methylmethacrylat-Acrylnitril-Butadien-Styrol (MABS)-Polymerisate oder Mischungen davon oder mit Polyphenylenether (PPE) eingesetzt.

Besonders bevorzugt wird ein Styrolhomopolymerisat mit einem Molekulargewicht im Bereich von 70.000 bis 400.000 g/mol, besonders bevorzugt 190.000 bis 400.000 g/mol, ganz besonders bevorzugt 210.000 bis 400.000 g/mol eingesetzt.

Für die Herstellung von expandiertem Polystyrol oder expandiertem Styrolcopolymerisat werden im allgemeinen die oben beschriebenen expandierbaren Styrolhomopolymerisate oder expandierbaren Styrolcopolymerisate in bekannter Weise durch Erhitzen auf Temperaturen oberhalb ihres Erweichungspunkts, beispielsweise mit Heißluft oder vorzugsweise Dampf und oder Druckänderung expandiert (oft auch als "aufgeschäumt" bezeichnet)., wie zum Beispiel in Kunststoff Handbuch 1996, Band 4 "Polystyrol", Hanser 1996, Seiten 640 bis 673 oder US 5,112,875 beschrieben Das expandierbare Polystyrol oder expandierbare Styrolcopolymerisat ist in der Regel in an sich bekannter Weise durch Suspensionspolymerisation oder mittels Extrusionsverfahren wie oben beschrieben erhältlich.

Beim Expandieren dehnt sich das Treibmittel aus, die Polymerpartikel nehmen an Größe zu und Zellstrukturen entstehen.

Das expandierte Polystyrol oder expandierte Styrolcopolymerisat weist eine Schüttdichte, von 10 bis 100 kg/m³ auf, bevorzugt 45 bis 100 kg/m³, besonders bevorzugt 45 bis 80 kg/m³, insbesondere 50 bis 70 kg/m³.

Das expandierte Polystyrol oder expandierte Styrolcopolymerisat wird in der Regel in Form von Kugeln oder Perlen mit einem mittleren Durchmesser im Bereich von 0,25 bis 10 mm, bevorzugt im Bereich von 1 bis 8,5 mm, insbesondere im Bereich von 1,2 bis 7 mm erhalten und verwendet.

Die expandierten Polystyrol- oder expandierten Styrolcopolymerisat-Kugeln weisen vorteilhaft eine kleine Oberfläche pro Volumen auf, beispielsweise in Form eines sphärischen oder elliptischen Partikels.

Die expandierten Polystyrol- oder expandierten Styrolcopolymerisat-Kugeln sind vorteilhaft geschlossenzellig. Die Offenzelligkeit nach DIN-ISO 4590 beträgt in der Regel weniger als 30%.

Die expandierten Kunststoffteilchen wie oben, inklusive Vorzugsbereiche, beschrieben, vorzugsweise expandierten thermoplastischen Kunststoffteilchen wie oben, inklusive Vorzugsbereiche, beschrieben, besonders bevorzugt expandiertes Polystyrol oder expandiertes Styrolcopolymerisat wie oben, inklusive Vorzugsbereiche, beschrieben können noch Härter und/oder Formaldehydfänger enthalten, wie beispielsweise für Härter in der europäischen Patentanmeldung 10155516.7 auf Seite 5, Zeile 4 bis Seite 9, Zeile 18 und Beispiel A2) beschrieben und wie beispielsweise für Formaldehydfänger in der europäischen Patentanmeldung 10155518.3, S. 5, Zeile 6 bis Seite 9, Zeile 12 und Beispiele A2) bis A3.2.2) beschrieben, worauf hier jeweils ausdrücklich Bezug genommen wird.

Bei Verwendung von mit Formaldehydfänger behandelten expandierten Kunststoffteilchen, bevorzugt expandiertes Polystyrol oder expandiertes Styrolcopolymerisat wie oben, inklusive Vorzugsbereiche, beschrieben, wird im allgemeinen weniger Formaldehydfänger im Bindemittel b) verwendet, als bei der Variante in welcher die expandierten Kunststoffteilchen nicht mit Formaldehydfänger behandelt sind.

Die Menge der expandierten Kunststoffteilchen wie oben, inklusive Vorzugsbereiche, beschrieben, vorzugsweise expandierten thermoplastischen Kunststoffteilchen wie oben, inklusive Vorzugsbereiche, beschrieben, besonders bevorzugt expandiertes Polystyrol oder expandiertes Styrolcopolymerisat wie oben, inklusive Vorzugsbereiche, beschrieben, bezogen auf die lignocellulosehaltigen Partikel wie oben, inklusive Vorzugsbereiche, beschrieben, vorzugsweise holzhaltigen Partikel der Mittelschicht oder Mittelschichten A) und gegebenenfalls der Deckschicht oder Deckschichten B) liegt im Bereich von 1 bis 25 Gew.-%, vorzugsweise 2 bis 15 Gew.-%, besonders bevorzugt 3 bis 12 Gew.-%, jeweils bezogen auf die entsprechende Schicht A) oder B) oder die Summe der entsprechenden Schichten A) oder B).

Die mehrschichtigen lignocellulosehaltigen Formkörper können eine regelmäßige oder unregelmäßige Raumform einnehmen. Als gewünschte Formen kommen die folgenden beispielhaft in Frage: alle regelmäßigen Formkörper, wie Kugel, Zylinder, Quader, Platten; alle unregelmäßigen Formen wie unregelmäßige Hohlräume, Omamente.

Bevorzugte gewünschte Formen sind flächig, besonders bevorzugt ist die Form einer Platte.

Weiter bevorzugte mehrschichtige lignocellulosehaltige Formkörper enthalten mehr als 70 Gew.-% lignocellulosehaltige Partikel, vorzugsweise Holzfasern, Holzspäne, Flachsfasern, Flachsschäben.

Die durchschnittliche Dichte der mehrschichtigen lignocellulosehaltigen Formkörper liegt üblicherweise im Bereich von 300 kg/m³ bis 950 kg/m³, vorzugsweise von 350 kg/m³ bis 850 kg/m³.

Die durchschnittliche Dichte leichter mehrschichtiger lignocellulosehaltigen Formkörper liegt üblicherweise im Bereich von 300 kg/m³ bis 600 kg/m³, vorzugsweise von 350 kg/m³ bis 600 kg/m³, besonders bevorzugt 400 kg/m³ bis 500 kg/m³

Die erfindungsgemäßen mehrschichtigen lignocellulosehaltigen Formkörper haben eine Mittelschicht oder mehrere Mittelschichten A), enthaltend lignocellulosehaltige Partikel und ein Bindemittel (a) und eine Deckschicht oder zwei Deckschichten B) enthaltend lignocellulosehaltige Partikel und ein Bindemittel (b) und wobei mindestens eine Mittelschicht A) expandierte Kunststoffteilchen enthält und gegebenenfalls mindestens eine Deckschicht B) expandierte Kunststoffteilchen enthält.

Mittelschicht oder Mittelschichten im Sinne der Erfindung sind alle Schichten, die nicht die äußeren Schichten sind.

Die äußere Schicht oder die äußeren Schichten der erfindungsgemäßen mehrschichtigen lignocellulosehaltigen Formkörper werden hier auch Deckschicht oder Deckschichten genannt.

Bevorzugte erfindungsgemäße mehrschichtige lignocellulosehaltigen Formkörper sind flächig, bevorzugt in Form einer Platte, enthalten beispielsweise Flachs- und/oder Holz-Partikel, besonders bevorzugt Holzspäne oder Holzfasern als lignocellulosehaltige Partikel und haben drei Schichten: eine Mittelschicht A) und auf deren Ober- und Unterseite jeweils eine Deckschicht B).

Zur Herstellung der mehrschichtigen lignocellulosehaltigen Formkörper, beispielsweise der oben genannten, dreischichtigen lignocellulosehaltigen Formkörper, werden vorzugsweise die folgenden Bindemittel für die jeweiligen Schichten verwendet:

In einer gut geeigneten Ausführungsform enthält das Bindemittel (b) keinen niedermolekularen Vernetzer (ii), jedoch eine Komponente (III), wie beispielshaft im folgenden unter Varianten 1 und 2 beschrieben.

### Variante 1:

Für die Mittelschicht A) oder die Mittelschichten A) enthält das Bindemittel (a) lediglich die Komponente (a1), vorzugsweise ein Aminoplastharz, besonders bevorzugt ein UF-Harz und/oder MUF-Harz.

Für eine Deckschicht B) oder die beiden Deckschichten B) wird das Bindemittel (b) verwendet; beispielsweise enthält das Bindemittel (b) eine wässrige Lösung eines erfindungsgemäßen Polymeren A, erhältlich durch radikalisch initiierte Lösungspolymerisation in Wasser von 70 Gew.-% Acrylsäure und 30 Gew.-% Maleinsäureanhydrid. Die Komponente (I) enthält keine weitere Vernetzerkomponente. Die Komponente (III) des Bindemittels (b) ist eine wässrige Dispersion eines erfindungsgemäßen Polymeren M, erhältlich durch radikalisch initiierte Emulsions-Polymerisation in Wasser von 50 bis 65 Gew.-% Styrol und 5 bis 15 Gew.-% Methylmethacrylat, 5 bis 15 Gew.-% n-Butylacrylat, 10 bis 30 Gew.-% Hydroxyethylacrylat und 2 bis 20 Gew.-% Glycidylmethacrylat, wobei die Summe der Monomeren 100 Gew.-% ergibt.

Das Bindemittel (b) enthält weiterhin die Komponente (II) in den oben definierten Mengen und einen, wie oben definierten Formaldehydfänger, in den wie dort definierten Mengen.

### Variante 2:

Für die Mittelschicht A) oder die Mittelschichten A) enthält das Bindemittel (a) die Komponente (a1), vorzugsweise ein Aminoplast, besonders bevorzugt ein UF-Harz und/oder MUF-Harz und die Komponente (a2), bevorzugt PMDI in den oben für die Kombination (a1) und (a2) definierten Mengen.

Für eine Deckschicht B) oder die beiden Deckschichten B) wird das Bindemittel (b) verwendet; beispielsweise enthält das Bindemittel (b) eine wässrige Lösung eines erfindungsgemäßen Polymeren A, erhältlich durch radikalisch initiierte Lösungspolymerisation in Wasser von 70 Gew.-% Acrylsäure und 30 Gew.-% Maleinsäureanhydrid. Die Komponente (I) enthält keine weitere Vernetzerkomponente. Die Komponente (III) des Bindemittels (b) ist eine wässrige Dispersion eines erfindungsgemäßen Polymeren M, erhältlich durch radikalisch initiierte Emulsions-Polymerisation in Wasser von 50 bis 65 Gew.-% Styrol und 5 bis 15 Gew.-% Methylmethacrylat, 5 bis 15 Gew.-% n-Butylacrylat, 10 bis 30 Gew.-% Hydroxyethylacrylat und 2 bis 20 Gew.-% Glycidylmethacrylat, wobei die Summe der Monomeren 100 Gew.-% ergibt.

Das Bindemittel (b) enthält weiterhin die Komponente (II) in den oben definierten Mengen und einen, wie oben definierten Formaldehydfänger, in den wie dort definierten Mengen.

In einer weiteren gut geeigneten Ausführungsform enthält das Bindemittel (b) einen niedermolekularen Vernetzer (ii) und keine Komponente (III), wie beispielshaft im folgenden unter Varianten 3 bis 5 beschrieben.

### Variante 3:

Für die Mittelschicht A) oder die Mittelschichten A) enthält das Bindemittel (a) lediglich die Komponente (a1), vorzugsweise ein Aminoplastharz, besonders bevorzugt ein UF-Harz und/oder MUF-Harz.

Für eine Deckschicht B) oder die beiden Deckschichten B) wird das Bindemittel (b) verwendet; beispielsweise enthält das Bindemittel (b) eine wässrige Lösung eines erfindungsgemäßen Polymeren A, erhältlich durch radikalisch initiierte Lösungspolymerisation in Wasser von 70 Gew.-% Acrylsäure und 30 Gew.-% Maleinsäureanhydrid. Die Komponente (I) enthält zusätzlich eine Vernetzerkomponente (ii), vorzugsweise mit mehr als zwei funktionellen Gruppen pro Vernetzermolekül, besonders bevorzugt Triethanolamin.

Das Bindemittel (b) enthält weiterhin die Komponente (II) in den oben definierten Mengen und einen, wie oben definierten Formaldehydfänger, in den wie dort definierten Mengen.

### Variante 4:

Für die Mittelschicht A) oder die Mittelschichten A) enthält das Bindemittel (a) lediglich die Komponente (a2), bevorzugt PMDI.

Für eine Deckschicht B) oder die beiden Deckschichten B) wird das Bindemittel (b) verwendet; beispielsweise enthält das Bindemittel (b) eine wässrige Lösung eines erfindungsgemäßen Polymeren A, erhältlich durch radikalisch initiierte Lösungspolymerisation in Wasser von 70 Gew.-% Acrylsäure und 30 Gew.-% Maleinsäureanhydrid. Die Komponente (I) enthält zusätzlich eine Vernetzerkomponente (ii), vorzugsweise mit mehr als zwei funktionellen Gruppen pro Vernetzermolekül, besonders bevorzugt Triethanolamin.

Das Bindemittel (b) enthält weiterhin die Komponente (II) in den oben definierten Mengen jedoch keinen Formaldehydfänger.

### Variante 5:

Für die Mittelschicht A) oder die Mittelschichten A) enthält das Bindemittel (a) die Komponenten (a1) und (a2), bevorzugt PMDI.

Für eine Deckschicht B) oder die beiden Deckschichten B) wird das Bindemittel (b) verwendet, jedoch ohne die Komponente (III); beispielsweise enthält das Bindemittel (b) eine wässrige Lösung eines erfindungsgemäßen Polymeren A, erhältlich durch radikalisch initiierte Lösungspolymerisation in Wasser von 70 Gew.-% Acrylsäure und 30 Gew.-% Maleinsäureanhydrid. Die Komponente (I) enthält zusätzlich eine Vernetzerkomponente (ii), vorzugsweise mit mehr als zwei funktionellen Gruppen pro Vemetzermolekül, besonders bevorzugt Triethanolamin.

Das Bindemittel (b) enthält weiterhin die Komponente (II) in den oben definierten Mengen und einen, wie oben definierten Formaldehydfänger, in den wie dort definierten Mengen.

In einer weiteren gut geeigneten Ausführungsform enthält das Bindemittel (b) sowohl einen niedermolekularen Vernetzer (ii) als auch eine Komponente (III), wie beispielshaft im folgenden unter Variante 6 beschrieben.

### Variante 6:

Für die Mittelschicht A) oder die Mittelschichten A) enthält das Bindemittel (a) die Komponente (a1), vorzugsweise ein Aminoplast, besonders bevorzugt ein UF-Harz und/oder MUF-Harz und/oder die Komponente (a2), bevorzugt PMDI in den oben für die Kombination (a1) und (a2) definierten Mengen.

Für eine Deckschicht B) oder die beiden Deckschichten B) wird das Bindemittel (b) verwendet; beispielsweise enthält das Bindemittel (b) eine wässrige Lösung eines erfindungsgemäßen Polymeren A, erhältlich durch radikalisch initiierte Lösungspolymerisation in Wasser von 70 Gew.-% Acrylsäure und 30 Gew.-% Maleinsäureanhydrid. Die Komponente (I) enthält zusätzlich eine Vernetzerkomponente (ii), vorzugsweise mit mehr als zwei funktionellen Gruppen pro Vernetzermolekül, besonders bevorzugt Triethanolamin. Die Komponente (III) des Bindemittels (b) ist eine wässrige Dispersion eines erfindungsgemäßen Polymeren M, erhältlich durch radikalisch initiierte Emulsions-Polymerisation in Wasser von 50 bis 65 Gew.-% Styrol und 5 bis 15 Gew.-% Methylmethacrylat, 5 bis 15 Gew.-% n-Butylacrylat, 10 bis 30 Gew.-% Hydroxyethylacrylat und 2 bis 20 Gew.-% Glycidylmethacrylat, wobei die Summe der Monomeren 100 Gew.-% ergibt.

Das Bindemittel (b) enthält weiterhin die Komponente (II) in den oben definierten Mengen und einen, wie oben definierten Formaldehydfänger, in den wie dort definierten Mengen.

Die Dicke der erfindungsgemäßen mehrschichtigen lignocellulosehaltigen Formkörper, vorzugsweise der plattenförmigen Formkörper, variiert mit dem Anwendungsgebiet und liegt in der Regel im Bereich von 0,5 bis 300 mm; bevorzugt sind relativ dünne plattenförmige Formkörper mit einer Dicke im Bereich von 4 bis 100 mm, insbesondere 6 bis 40 mm.

Die Dickenverhältnisse der Schichten der erfindungsgemäßen mehrschichtigen lignocellulosehaltigen Formkörper, vorzugsweise der plattenförmigen Formkörper, sind variabel. Üblicherweise sind die äußeren Schichten A), auch Deckschichten genannt, für sich genommen oder auch in Summe dünner als die Schicht oder Schichten der Mittelschicht(en) B).

Die Masse einer einzelnen Deckschicht liegt üblicherweise im Bereich von 5 bis 30 Gew.-%, vorzugsweise 10 bis 25 Gew.-% der Gesamtmasse des erfindungsgemäßen mehrschichtigen lignocellulosehaltigen Formkörpers.

Im bevorzugten erfindungsgemäßen mehrschichtigen lignocellulosehaltigen Formkörper, vorzugsweise der plattenförmigen Formkörper, liegt die Dicke der mittleren Schicht(en) B), bezogen auf die Gesamtdicke des erfindungsgemäßen mehrschichtigen lignocellulosehaltigen Formkörpers, vorzugsweise des plattenförmigen Formkörpers, im Bereich von 20 % bis 99 %, vorzugsweise 50 % bis 99 %, besonders bevorzugt 60 % bis 99 %.

Die Herstellung der erfindungsgemäßen mehrschichtigen lignocellulosehaltigen Formkörper, vorzugsweise jener in welchen die lignocellulosehaltigen Partikel Holzpartikel und/oder Flachspartikel sind, besonders bevorzugt Holzspäne- oder fasern, Flachsspäne oder Flachsschäben, geschieht in der üblichen Art, wie in "Taschenbuch der Spanplatten Technik" H.-J. Deppe, K. Ernst, 4. Aufl., 2000, DRW - Verlag Weinbrenner GmbH&Co., Leinfelden-Echterdingen, Kapitel 3.5 beschrieben.

Üblicherweise werden zunächst lignocellulosehaltigen Partikel, für die Mittelschicht(en) A) und die Deckschicht(en) B), beispielsweise Holz, Flachs, vorzugsweise Holz, zum Beispiel in Form von Fasern, Spänen, Furnieren oder Strands, wie oben beschrieben mit dem jeweiligen Bindemittel (a) (für die Mittelschicht(en) A)) oder (b) (für die Deckschicht(en) B)) in Berührung gebracht (auch "beleimt" genannt).

Das Beleimen kann vor, während oder nach Zusatz der expandierten Kunststoffteilchen wie oben, inklusive Vorzugsbereiche, beschrieben, vorzugsweise expandierten thermoplastischen Kunststoffteilchen wie oben, inklusive Vorzugsbereiche, beschrieben, besonders bevorzugt expandiertes Polystyrol oder expandiertes Styrolcopolymerisat wie oben, inklusive Vorzugsbereiche, beschrieben, zu den oben, inklusive Vorzugsbereiche, beschriebenen, lignocellulosehaltigen Partikel, für die Mittelschicht(en) A) und gegebenenfalls die Deckschicht(en) B),geschehen.

Vorzugsweise werden die lignocellulosehaltigen Partikel und die expandierten Kunststoffteilchen gemischt und anschließend beleimt oder die lignocellulosehaltigen Partikel und die expandierten Kunststoffteilchen werden beim Mischen beleimt.

In einer bevorzugten Ausführungsform wird bei der oben beschriebenen Herstellung der erfindungsgemäßen mehrschichtigen lignocellulosehaltigen Formkörper die Größe der expandierten Kunststoffteilchen wie oben, inklusive Vorzugsbereiche, beschrieben, vorzugsweise expandierten thermoplastischen Kunststoffteilchen wie oben, inklusive Vorzugsbereiche, beschrieben, besonders bevorzugt expandiertes Polystyrol oder expandiertes Styrolcopolymerisat wie oben, inklusive Vorzugsbereiche, beschrieben mit der Größe der, inklusive Vorzugsbereiche, obenbeschriebenen ,lignocellulosehaltigen Partikel, für die Mittelschicht(en) A) und gegebenenfalls die Deckschicht(en) B) abgestimmt, wie in WO 2008/046892 A2 (BASF SE), Seite 11, Zeile 18 bis Seite 12, Zeile 11 sowie den dort dargestellten erfindungsgemäßen Beispielen beschrieben, auf das hier ausdrücklich Bezug genommen wird.

Dann werden die so beleimten lignocellulosehaltigen Partikel, beispielsweise Holz, Flachs, vorzugsweise Holz, zum Beispiel in Form von Fasern, Spänen, Furnieren oder Strands, gemäß der gewünschten Reihenfolge des herzustellenden mehrschichtigen lignocellulosehaltigen Formkörpers übereinandergeschichtet und nach einem üblichen Verfahren zu mehrschichtigen lignocellulosehaltigen Formkörpern, vorzugsweise solchen in welchen die lignocellulosehaltigen Partikel, Holz, zum Beispiel in Form von Fasern, Spänen, Furnieren oder Strands sind, bei erhöhter Temperatur verpresst.

Hierzu werden üblicherweise durch Aufstreuen der so beleimten lignocellulosehaltigen Partikel, beispielsweise Holz, Flachs - vorzugsweise Holz, besonders bevorzugt Holz in Form von Spänen oder Fasern sowie der expandierten Kunststoffteilchen wie oben, inklusive Vorzugsbereiche, beschrieben, vorzugsweise expandierten thermoplastischen Kunststoffteilchen wie oben, inklusive Vorzugsbereiche, beschrieben, besonders bevorzugt expandiertes Polystyrol oder expandiertes Styrolcopolymerisat wie oben, inklusive Vorzugsbereiche, beschrieben - auf einen Träger eine Faser- / Spänematte erzeugt und diese wird üblicherweise bei Temperaturen von 80 °C bis 250 °C und bei Drücken von 5 bis 50 bar zu erfindungemäßen mehrschichtigen lignocellulosehaltigen Formkörpern verpresst (siehe zum Beispiel:" Taschenbuch der Spanplatten Technik" H.-J. Deppe, K. Ernst, 4. Aufl., 2000, DRW - Verlag Weinbrenner GmbH & Co., Leinfelden-Echterdingen, Seite 232 - 254. "MDF - Mitteldichte Faserplatten" H.-J. Deppe, K. Ernst, 1996, DRW - Verlag Weinbrenner GmbH&Co., Leinfelden-Echterdingen, Seite 93 - 104).

Die benötigten Presszeiten zur Plattenherstellung werden üblicherweise in "Sekunden pro mm Plattendicke" bzw. s/mm angegeben (oft auch als Presszeitfaktor bezeichnet).
Für erfindungsgemässe mehrschichtige lignocellulosehaltige Formkörper werden in der Regel Presszeitfaktoren benötigt, wie sie für die schnellen Formaldehydharze bekannt sind: auf einer Siempelkamp Laborpresse (Ausmaße 520 mm x 520 mm) werden in der Regel für erfindungsgemäße Formkörper Presszeitfaktoren von 8 bis 10 s/mm benötigt, ebenso wie für Platten, welche nur mit aminoplasthaltigen Bindern hergestellt werden; Formkörper hergestellt mit formaldehydfreien Bindemitteln, beispielsweise Produkte der Acrodur® Produktpalette der BASF SE, benötigen Presszeitfaktoren von mehr als 25 s/mm.

Als besonders bevorzugte erfindungsgemäße mehrschichtige lignocellulosehaltige Formkörper kommen alle in Betracht, die aus Holzstreifen gefertigt sind, beispielsweise Furnierplatten oder Sperrholzplatten oder aus Holzspänen hergestellte mehrschichtige lignocellulosehaltige Formkörper, beispielsweise Spanplatten oder OSB-Platten, sowie mehrschichtige Holzfaserwerkstoffe wie LDF-, MDF- und HDF-Platten.

Vorteilhaft werden nach dem erfindungsgemäßen Verfahren formaldehydfreie Bindemittel enthaltende Holzwerkstoffe hergestellt. Bevorzugt sind mehrschichtige OSB-, Holzfaser- und Spanplatten.

Ferner betrifft die vorliegende Erfindung die Verwendung der erfindungsgemäßen mehrschichtigen lignocellulosehaltigen Formkörper, bevorzugt der erfindungsgemäßen mehrschichtigen holzhaltigen Formkörper zur Herstellung von Möbeln, von Verpackungsmaterialien, im Hausbau, im Trockenausbau oder im Innenausbau, beispielsweise als Laminat, Dämmstoff, Wand- oder Deckenelement, oder auch in Kraftfahrzeugen.

Die erfindungsgemäßen mehrschichtigen lignocellulosehaltigen Formkörper zeigen eine stark reduzierte Emission von Formaldehyd oder praktisch keine Emission von Formaldehyd und lassen sich mit sehr kurzen Presszeiten herstellen.

Die erfindungsgemäßen mehrschichtigen lignocellulosehaltigen Formkörper zeigen außerdem eine gute Abhebefestigkeit für die Deckschichten, gute Querzugsfestigkeiten sowie gute Feuchtigkeitsbeständigkeit.

### Beispiele

### 1. Allgemeines

Mengenangaben in % atro sind Gewichtsprozent bezogen auf die Nettomasse trockenen Holzes. Atro ist dabei die Abkürzung für "absolut trockenes Holz", in der Literatur auch als darrtrockener Zustand bezeichnet; im Englischen wird die Abkürzung O.D. (= oven dry) verwendet.

### 2. Meßmethoden und Meßergebnisse

Die Bestimmung der Formaldehydemission erfolgte nach folgenden Prüfverfahren für Holzwerkstoffe (siehe auch Bundesgesetzblatt 10/91, S. 488/489):
Perforatorwert: DIN EN 120, ISO 12460-5;
Prüfkammermethode (Option 2: 1m³-Kammer): DIN EN 717-1;

Zur Beurteilung der mechanischen Eigenschaften von Holzwerkstoffen wurden folgende Parameter bestimmt:
Abhebefestigkeit nach EN 311;
Biegefestigkeit nach EN 310;
Querzugfestigkeit erfolgte nach EN 319;
Wasserbeständigkeit bzw. "Quellwerte" nach EN 317
und der unten beschriebenen Methode "Wasseraufnahme".

Die Bestimmung der Wasseraufnahme erfolgte analog zu DIN EN 317 mit dem Unterschied, dass anstellte der Dicke des Prüfkörpers dessen Masse durch Wägung vor sowie nach 24-stündiger Wasserlagerung bestimmt wird. Die Wasseraufnahme WA jedes Prüfkörpers in Prozent der Anfangsmasse ist nach folgender Formel zu berechnen: WA = 100 x (m2 - m1) / m1. Dabei ist:
m1 die Masse des Prüfkörpers vor der Wasserlagerung,
   in Gramm (gemessen auf 0,01 g)
m2 die Masse des Prüfkörpers nach der Wasserlagerung,
   in Gramm (gemessen auf 0,01 g)

Die Wasseraufnahme wird auf eine Dezimalstelle angegeben.

Die Bestimmung der Holzfeuchte erfolgte nach DIN 52183.

### 3. Herstellung der mehrschichtigen lignocellulosehaltigen Formkörper, insbesondere die Herstellung von 3-schichtigen Laborspanplatten

Eine bestimmte Menge Späne aus Fichtenholz (klimatisiert bei 20°C und 65% Luftfeuchte) plus Additive wurde mit den angegebenen Mengen Bindemittel bzw. -komponenten (siehe Tabelle 1A) im Lödige-Mischer beleimt. Die Beleimung erfolgte, wenn Isocyanate als Bindemittel eingesetzt wurden, in zwei Schritten, wie im folgenden erläutert, ansonsten, wenn nicht anders angegeben, in einem Schritt. Die genannte Beleimung in zwei Schritten wurde wie folgt durchgeführt: Die Späne wurden zuerst mit der in Tabelle 1A genannten Menge der Komponente (II) (Lupranat® M 20 FB) beleimt und anschließend mit einer Mischung der übrigen in Tabelle 1 A genannten Komponenten des Bindemittels (b) beleimt.

Von den beleimten Spänen wurde die Span-Feuchte gemessen. Die Späne für Deck- und Mittelschicht wurden getrennt voneinander beleimt.

Anschließend wurde die Span-Matte manuell gestreut: zuerst eine Deckschicht, dann die Mittelschicht, bereits mit der in Tabelle 1 A genannten Menge expandiertes kugelförmiges Styrolhomopolymerisat mit einer Schüttdichte von 50 g/l (in den Tabellen 1A und als KAURIT LIGHT 200 bezeichnet) vermischt, und zuletzt die zweite Deckschicht im Massenverhältnis von 1 Teil Deckschichtspäne, dann 4 Teile Mittelschichtspäne und wiederum 1 Teil Deckschichtspäne. Die Matte wurde in einer Heißpresse bei 210°C und dem in den Beispielen angegebenen Pressdruckprofil verpresst.

Die Eigenschaften der in den Versuchen hergestellten dreischichtigen lignocellulosehaltigen Formkörper wurden mit Hilfe der oben angegebenen Methoden bestimmt.

### 4. Bindemittel bzw. Komponenten des Bindemittels

In den folgenden Beispielen wurden die erfindungsgemäße Bindemittel (a) und (b) eingesetzt, wie im folgenden (inklusive Tabellen) beschrieben:

### Polymer A

Das Polymer A wurde erhalten durch radikalisch initiierte Lösungspolymerisation in Wasser von 70 Gew.-% Acrylsäure und 30 Gew.-% Maleinsäureanhydrid. Das gewichtsmittlere Molekulargewicht Mw betrug 80.000 g/mol.

### Mittelschichtbindemittel

Die eingesetzten Mittelschichtbindemittel waren Leime der BASF SE aus der Produktgruppe der UF-Leime, Handelsname KAURIT® (KL = Kaurit®-Leim).

### Beispiel 1: PMDI als Co-Bindemittel in der Deckschicht (Plattendichte ca. 400 kg/m³)

Es wurden mehrere Laborspanplatten mit den Dimensionen 56,5 cm * 44,0 cm * 16,0 mm und unterschiedlichen Bindemittelzusammensetzungen wie oben unter 3. beschrieben hergestellt. Die angestrebte Rohdichte der Platten betrug 400 kg/m³.

In den Mittelschichten der Spanplatten wurden 10 Gew.-% der Holzspäne durch das in Ziffer 3,. charakterisierte expandierte Styrolhomopolymerisat (in Tabelle 1A als KAURIT LIGHT 200 bezeichnet) ersetzt.

Pressdruckprofil: 50 s bei 4 bar, 50 s bei 2 bar, 40 s bei 1 bar.

In Tabelle 1 A sind die Bindemittelansätze der verschiedenen Platten angegeben. Mengenangaben ohne explizite Mengeneinheit sind Massenteile. Die Spalte "MS" bezeichnet das Bindemittel der Mittelschicht, welches für alle drei Ansätze identisch ist. Die Spalten mit "DS" bezeichnen die Bindemittel der Deckschichten. Dabei ist in Zeile H eine Extradosage Wasser gemeint, welche zum Bindemittel hinzugegeben wird: im Fall 1 ist dies als Extra-Wasser, welches zum Leim gemischt wurde, und in den Fällen 2 und 3 ist das die Menge Wasser, in der die festen Anteile des Bindemittels in Zeilen D bis G gelöst werden.

**Tabelle 1A: Herstellungsparameter**

| | Ansatz | | 1 | | 2 | | 3 | |
|---|---|---|---|---|---|---|---|---|
| | | | DS | MS | DS | MS | DS | MS |
| A | KL 347 [1] | % atro | 8,50 | 8,50 | | 8,50 | | 8,50 |
| B | Ammoniumnitrat-Lösung (52%, Härter) | % v/v von A | 1,00 | 4,00 | | 4,00 | | 4,00 |
| C | Hydrowax 560 (60%) | % atro | 0,03 | 0,05 | | 0,05 | | 0,05 |
| D | Polymer A (100%) | % atro | | | 3,59 | | 3,08 | |
| E | Triethanolamin | % atro | | | 1,08 | | 0,92 | |
| F | Harnstoff (100%) | % atro | | | 2,33 | | 2,35 | |
| G | Hydrowax® Q (50%)[4] | % atro | | | 0,02 | | 0,02 | |
| H | Extra-Wasser | % atro | 0,50 | | 5,53 | | 5,30 | |
| J | Lupranat ®M20 FB [2] | % atro | | | | | 1,00 | |
| K | Holzanteil ersetzt durch KAURIT Light 200[3] | % | | 10 | | 10 | | 10 |

| | | | | | | | | |
|---|---|---|---|---|---|---|---|---|
| [1] Eine wässrige Lösung oder Dispersion eines Harnstoff-Formaldehyd (UF)-Harzes der BASF SE; Trockenharzgehalt 65 bis 70 Gew.-%. [2]: Lösungsmittelfreies hoch reaktives organisches Isocyanatprodukt der BASF Polyurethane GmbH auf Basis von 4,4'-Diphenylmethyldiisocyanat mit höherfunktionellen Oligomeren und Isomeren, wobei die mittlere Funktionalität 2,7 ist und der NCO-Gehalt 31,8 g/100g ist (Technisches Merkblatt Lupranat® M20 FB vom Mai 2010). [3] Expandiertes Stryrol-Homoplymerisat, wie oben unter Ziffer 3. beschrieben. [4] Hydrowax® Q: Ein Hydrophobierungsmittel der Firma Sasol auf Paraffinbasis, eine wässrige Emulsion; Feststoffgehalt 60% bzw. 50%. | | | | | | | | |

**Tabelle 1B: Ergebnisse**

| Ansatz | | 1 | 2 | 3 |
|---|---|---|---|---|
| Dicke | | | | |
| bei Prüfung | mm | 15,73 | 15,84 | 15,73 |
| | | | | |
| Querzugfestigkeit V 20 | | | | |
| Dichte (n = 10) | kg/m³ | 400,57 | 396,94 | 407,97 |
| Querzugfestigkeit | N/mm² | 0,48 | 0,31 | 0,43 |
| gerissen in Deckschicht | von 10 | 0 | 8 | 0 |
| | | | | |
| Quellung (50 * 50 mm) | | | | |
| Dichte (n = 10) | kg/m³ | 397,30 | 388,09 | 401,36 |
| Quellung nach 24 h | % | 12,25 | 15,72 | 15,22 |
| Wasseraufnahme nach 24 h | % | 132,42 | 148,65 | 137,50 |
| | | | | |
| Abhebefestigkeit | | | | |
| Abhebefestigkeit, oben (n = 5) | N/mm² | 0,64 | 0,35 | 0,52 |
| Abhebefestigkeit, unten (n = 5) | N/mm² | 0,54 | 0,27 | 0,62 |
| | | | | |
| Biegefestigkeit | | | | |
| Biegefestigkeit, längs (n = 3) | N/mm² | 4,91 | 5,95 | 6,81 |
| Biegefestigkeit, quer (n = 3) | N/mm² | 6,78 | 5,57 | 5,08 |
| | | | | |
| Perforatorwert nach EN120 | | | | |
| Bezogen auf 6.5% Holzfeuchte | mg HCHO / 100 g atro Probe | 8,75 | 4,40 | 5,39 |
| | | | | |
| Formaldehydabgabe mittels | | | | |
| 1m³-Kammer-Wert (EN 717-1) | ppm | 0,346 | 0,143 | 0,126 |

| | | | | |
|---|---|---|---|---|
| Ansatz 1 stellt eine mit UF-Leim und expandiertem Styrolhomopolymerisat hergestellte Spanplatte gemäß WO/2008/046892 A dar. Ansatz 2 und 3 sind Spanplatten in welchen die Deckschicht jeweils ohne UF-Leim hergestellt wurde, wobei die erfindungsgemäße Deckschicht in Platte 3 ein Isocyanat enthält. | | | | |

Beide Platten 2 und 3 weisen, im Vergleich zur Platte 1, signifikant reduzierte Formaldehydemissionen auf.

Die mechanischen Eigenschaften bei Platte 2 sind jedoch schlechter als bei Platte 1.

Die erfindungsgemäße Platte 3 enthält im Deckschichtbindemittel ein Isocyanat, was bei gleichbleibend niedriger Formaldehydemission die mechanischen Eingenschaften der Platte 3 signifikant verbessert: damit erzielt man eine Reduktion der 24h-Quellung und Wasseraufnahme sowie eine Erhöhung der Querzugfestigkeit und Abhebefestigkeit.

Fazit: Die erfindungsgemäße Komponente (II) als Co-Bindemittel in der Deckschicht verbessert mechanische Eigenschaften von Spanplatten mit niedriger Formaldehydemission und einer niedrigen Dichte von ca. 400 kg/m³.

### Beispiel 2: PMDI als Co-Bindemittel in der Deckschicht (Plattendichte ca. 500 kg/m³)

Es wurden mehrere Laborspanplatten mit den Dimensionen 56,5 cm * 44,0 cm * 16,0 mm und unterschiedlichen Bindemittelzusammensetzungen wie oben unter 3. beschrieben hergestellt. Die angestrebte Rohdichte der Platten betrug 500 kg/m³.

In den Mittelschichten der Spanplatten wurden 10 Gew.-% der Holzspäne durch das in Ziffer 3, charakterisierte expandierte Styrolhomopolymerisat, wie in Tabelle 1A mit KAURIT LIGHT 200 bezeichnet, ersetzt.

Pressdruckprofil: 50 s bei 4 bar, 50 s bei 2 bar, 40 s bei 1 bar.

Die Spanplatten aus Beispiel 2 sind in ihrer Zusammensetzung analog zu Beispiel 1, wobei die Dichte der hergestellten Spanplatten in Beispiel 2 ca. 500 kg/m³ beträgt.

Die Bindemittelansätze der verschiedenen Platten für Beispiel 2 entsprechen jenen für Beispiel 1 und sind daher in Tabelle 1A beschrieben.

**Tabelle 2: Ergebnisse**

| Ansatz | | 1 | 2 | 3 |
|---|---|---|---|---|
| Dicke | | | | |
| bei Prüfung | mm | 15,95 | 15,73 | 15,74 |
| | | | | |
| Querzugfestigkeit V 20 | | | | |
| Dichte (n = 10) | kg/m³ | 499,74 | 457,14 | 482,43 |
| Querzugfestigkeit | N/mm² | 0,71 | 0,38 | 0,65 |
| gerissen in Deckschicht | von 10 | 0 | 8 | 0 |
| | | | | |
| Quellung (50 * 50 mm) | | | | |
| Dichte (n = 10) | kg/m³ | 500,47 | 458,74 | 485,05 |
| Quellung nach 24 h | % | 15,12 | 24,56 | 17,37 |
| Wasseraufnahme nach 24 h | % | 101,71 | 135,94 | 114,85 |
| | | | | |
| Abhebefestigkeit | | | | |
| Abhebefestigkeit, oben (n = 4) | N/mm² | 0,90 | 0,63 | 1,08 |
| Abhebefestigkeit, unten (n = 4) | N/mm² | 0.88 | 0,57 | 0,78 |
| | | | | |
| Biegefestigkeit | | | | |
| Biegefestigkeit, längs (n = 3) | N/mm² | 9,55 | 9,99 | 10,60 |
| Biegefestigkeit, quer (n = 3) | N/mm² | 11,10 | 8,69 | 10,43 |
| | | | | |
| Perforatorwert nach EN120 | | | | |
| Bezogen auf 6.5% Holzfeuchte | mg HCHO/ 100 g atro Probe | 8,80 | 5,20 | 4,90 |
| | | | | |
| Formaldehydabgabe mittels | | | | |
| 1m³-Kammer-Wert (EN 717-1) | ppm | 0,362 | 0,127 | 0,119 |

| | | | | |
|---|---|---|---|---|
| Ansatz 1 stellt eine mit UF-Leim und expandiertem Styrolhomopolymerisat hergestellte Spanplatte gemäß WO/2008/046892 A dar. Ansatz 2 und 3 sind efindungsgemäße leichte Spanplatten in welchen die Deckschicht jeweils ohne UF-Leim hergestellt wurde, wobei die erfindungsgemäße Deckschicht in Platte 3 ein Isocyanat enthält. Beide Platten 2 und 3 weisen, im Vergleich zur herkömmlichen Platte 1, signifikant reduzierte Formaldehydemissionen auf. | | | | |

Die mechanischen Eigenschaften bei Platte 2 sind schlechter als bei Platte 1.

Die erfindungsgemäße Platte 3 enthält im Deckschichtbindemittel ein Isocyanat, was bei gleichbleibend niedriger Formaldehydemission die mechanischen Eingenschaften der Platte 3 signifikant verbessert: damit erzielt man eine Reduktion der 24h-Quellung und Wasseraufnahme sowie eine Erhöhung der Querzugfestigkeit und Abhebefestigkeit.

Fazit: Die erfindungsgemäße Komponente (II) als Co-Bindemittel in der Deckschicht verbessert mechanische Eigenschaften von Spanplatten mit niedriger Formaldehydemission und einer Dichte von ca. 500 kg/m³.

## Patentansprüche

1. Mehrschichtiger lignocellulosehaltiger Formkörper aus
A) einer Mittelschicht oder mehreren Mittelschichten, enthaltend lignocellulosehaltige Partikel, welche erhältlich ist/sind durch Verwendung eines Bindemittels (a) und
B) einer Deckschicht oder mehreren Deckschichten, enthaltend lignocellulosehaltige Partikel, welche erhältlich ist/sind durch Verwendung eines Bindemittels (b),
wobei das Bindemittel (a) ausgewählt wird aus der Gruppe bestehend aus (a1) Formaldehydharzen und (a2) einem organischen Isocyanat mit mindestens zwei Isocyanatgruppen;
wobei das Bindemittel (b) folgende Komponenten enthält:
Eine wässrige Komponente (I) enthaltend
(i) ein Polymer A, welches aus folgenden Monomeren aufgebaut ist:
a) 70 bis 100 Gew.-% wenigstens einer ethylenisch ungesättigten Monound/oder Dicarbonsäure (Monomer(e) A1) und
b) 0 bis 30 Gew.-% wenigstens eines weiteren ethylenisch ungesättigten Monomeren, welches sich von den Monomeren A1 unterscheidet (Monomer(e) A2),
gegebenenfalls
(ii) einen niedermolekularen Vernetzer mit mindestens zwei funktionellen Gruppen welche ausgewählt sind aus der Gruppe Hydroxy, Carbonsäure und deren Derivate, primäres, sekundäres und tertiäres Amin, Epoxy, Aldehyd,
ein organisches Isocyanat mit mindestens zwei Isocyanatgruppen als Komponente (II)
und gegebenenfalls eine Komponente (III) als wässrige Dispersion, enthaltend ein oder mehrere Polymer(e) M, welche(s) aus folgenden Monomeren aufgebaut ist:
a) 0 bis 50 Gew.-% wenigstens eines ethylenisch ungesättigten Monomeren, welches wenigstens eine Epoxid- und/oder wenigstens eine Hydroxyalkylgruppe enthält (Monomer(e) M1), und
b) 50 bis 100 Gew.-% wengistens eines weiteren ethylenisch ungesättigten Monomeren, welches sich von den Monomeren M1 unterscheidet (Monomer(e) M2)
sowie gegebenenfalls übliche Additive als Komponente (IV),
und wobei mindestens eine Mittelschicht A) expandierte Kunststoffteilchen enthält und gegebenenfalls mindestens eine Deckschicht B) expandierte Kunststoffteilchen enthält,
und gegebenenfalls enthält das Bindemittel (b) einen Formaldehydfänger.

2. Mehrschichtiger lignocellulosehaltiger Formkörper gemäß Anspruch 1, **dadurch gekennzeichnet, dass** das Bindemittel (b) einen niedermolekularen Vernetzer (ii) und keine Komponente (III) enthält.

3. Mehrschichtiger lignocellulosehaltiger Formkörper gemäß Anspruch 1, **dadurch gekennzeichnet, dass** das Bindemittel (b) keinen niedermolekularen Vernetzer (ii), jedoch eine Komponente (III) enthält.

4. Mehrschichtiger lignocellulosehaltiger Formkörper gemäß Anspruch 1, **dadurch gekennzeichnet, dass** das Bindemittel (b) sowohl einen niedermolekularen Vernetzer (ii) als auch eine Komponente (III) enthält.

5. Mehrschichtiger lignocellulosehaltiger Formkörper gemäß Anspruch 1 bis 4, **dadurch gekennzeichnet, dass** das Bindemittel (b) einen Formaldehydfänger enthält.

6. Mehrschichtiger lignocellulosehaltiger Formkörper gemäß Anspruch 1 bis 5, **dadurch gekennzeichnet, dass** er dreischichtig ist, mit einer Mittelschicht A) und zwei Deckschichten B).

7. Mehrschichtiger lignocellulosehaltiger Formkörper gemäß Anspruch 1 bis 6, **dadurch gekennzeichnet, dass** das Bindemittel (a) lediglich ein Formaldehydharz (a1) ist.

8. Mehrschichtiger lignocellulosehaltiger Formkörper gemäß Anspruch 1 bis 6, **dadurch gekennzeichnet, dass** das Bindemittel (a) lediglich ein organisches Isocyanat mit mindestens zwei Isocyanatgruppen (a2) ist.

9. Mehrschichtiger lignocellulosehaltiger Formkörper gemäß Anspruch 1 bis 6 **dadurch gekennzeichnet, dass** das Bindemittel (a) die Komponente (a1) im Bereich von 70 bis 99,9 Gew.-% und die Komponente (a2) im Bereich von 0,1 bis 30 Gew.%, jeweils bezogen auf die Summe (a1) und (a2) der reinen unverdünnten Substanzen enthält.

10. Mehrschichtiger lignocellulosehaltiger Formkörper gemäß Anspruch 1 bis 9, **dadurch gekennzeichnet, dass** das Bindemittel (b) die Komponente (I) im Bereich von 30 bis 90 Gew.-% und die Komponente (II) im Bereich von 10 bis 70 Gew.%, jeweils bezogen auf die Summe (I) und (II) der reinen unverdünnten Substanzen enthält.

11. Mehrschichtiger lignocellulosehaltiger Formkörper gemäß Anspruch 1 bis 10, **dadurch gekennzeichnet, dass** die expandierten Kunststoffteilchen eine Schüttdichte im Bereich von 10 bis 100 kg/m³ haben.

12. Mehrschichtiger lignocellulosehaltiger Formkörper gemäß Anspruch 1 bis 11 in Form einer Platte.

13. Verfahren zur Herstellung eines mehrschichtigen lignocellulosehaltigen Formkörpers wie in den Ansprüchen 1 bis 12 definiert, indem man die Lignocellulosepartikel für die Mittelschicht oder die Mittelschichten A) mit dem Bindemittel (a) und den expandierten Kunststoffteilchen in Berührung bringt, die Lignocellulosepartikel für die Deckschicht oder die Deckschichten B) mit dem Bindemittel (b) und gegebenenfalls den expandierten Kunststoffteilchen in Berührung bringt, gemäß der gewünschten Reihenfolge übereinanderschichtet und bei erhöhter Temperatur verpresst.

14. Verwendung eines mehrschichtigen lignocellulosehaltigen Formkörpers wie in den Ansprüchen 1 bis 12 definiert, zur Herstellung von Gegenständen aller Art und im Baubereich.

15. Verwendung eines mehrschichtigen lignocellulosehaltigen Formkörpers wie in den Ansprüchen 1 bis 12 definiert, zur Herstellung von Möbeln und Möbelteilen, von Verpackungsmaterialien, im Hausbau oder im Innenausbau oder in Kraftfahrzeugen.

## Claims

1. A multilayer lignocellulose-containing molding comprising
A) a middle layer or a plurality of middle layers comprising lignocellulose-containing particles which is/are obtainable by using a binder (a) and
B) a covering layer or a plurality of covering layers comprising lignocellulose-containing particles which is/are obtainable by using a binder (b),
the binder (a) being selected from the group consisting of (a1) formaldehyde resins and (a2) an organic isocyanate having at least two isocyanate groups;
the binder (b) comprising the following components:
an aqueous component (I) comprising
(i) a polymer A which is composed of the following monomers:
a) from 70 to 100% by weight of at least one ethylenically unsaturated mono- and/or dicarboxylic acid (monomer(s) A1) and
b) from 0 to 30% by weight of at least one further ethylenically unsaturated monomer which differs from the monomers A1 (monomer(s) A2)
optionally
(ii) a low molecular weight crosslinking agent having at least two functional groups which are selected from the group consisting of hydroxyl, carboxyl and derivatives thereof, primary, secondary and tertiary amine, epoxy, aldehyde,
an organic isocyanate having at least two isocyanate groups as component (II)
and, optionally, a component (III), as an aqueous dispersion, comprising
one or more polymer(s) M which is/are composed of the following monomers:
a) from 0 to 50% by weight of at least one ethylenically unsaturated monomer which comprises at least one epoxide and/or at least one hydroxyalkyl group (monomer(s) M1) and
b) from 50 to 100% by weight of at least one further ethylenically unsaturated monomer which differs from the monomers M1 (monomer(s) M2)
and, optionally, customary additives as component (IV),
and at least one middle layer A) comprising expanded plastic particles and, optionally, at least one covering layer B) comprising expanded plastic particles,
and the binder (b) optionally comprises a formaldehyde scavenger.

2. The multilayer lignocellulose-containing molding according to claim 1, wherein the binder (b) comprises a low molecular weight crosslinker (ii) and no component (III).

3. The multilayer lignocellulose-containing molding according to claim 1, wherein the binder (b) comprises a component (III) but no molecular weight crosslinker (ii).

4. The multilayer lignocellulose-containing molding according to claim 1, wherein the binder (b) comprises both a low molecular weight crosslinker (ii) and a component (III).

5. The multilayer lignocellulose-containing molding according to claims 1 to 4, wherein the binder (b) comprises a formaldehyde scavenger.

6. The multilayer lignocellulose-containing molding according to claims 1 to 5, which is in the form of three layers, comprising a middle layer A) and two covering layers B).

7. The multilayer lignocellulose-containing molding according to claims 1 to 6, wherein the binder (a) is only a formaldehyde resin (a1).

8. The multilayer lignocellulose-containing molding according to claims 1 to 6, wherein the binder (a) is only an organic isocyanate having at least two isocyanate groups (a2).

9. The multilayer lignocellulose-containing molding according to claims 1 to 6, wherein the binder (a) comprises the component (a1) in the range from 70 to 99.9% by weight and the component (a2) in the range from 0.1 to 30% by weight, based in each case on the sum of (a1) and (a2) of the pure undiluted substances.

10. The multilayer lignocellulose-containing molding according to claims 1 to 9, wherein the binder (b) comprises the component (I) in the range from 30 to 90% by weight and the component (II) in the range from 10 to 70% by weight, based in each case on the sum of (I) and (II) of the pure undiluted substances.

11. The multilayer lignocellulose-containing molding according to claims 1 to 10, wherein the expanded plastic particles have a bulk density in the range from 10 to 100 kg/m³.

12. The multilayer lignocellulose-containing molding according to claims 1 to 11, in the form of a board.

13. A process for the production of a multilayer lignocellulose-containing molding as defined in claims 1 to 12, by bringing the lignocellulose particles for the middle layer or the middle layers (A) into contact with the binder (a) and the expanded plastic particles, bringing the lignocellulose particles for the covering layer or the covering layers (B) into contact with the binder (b) and, optionally, the expanded plastic particles, arranging them in layers one on top of the other according to the desired sequence and pressing them at elevated temperature.

14. The use of a multilayer lignocellulose-containing molding as defined in claims 1 to 12 for the production of articles of all types and in the construction sector.

15. The use of a multilayer lignocellulose-containing molding as defined in claims 1 to 12 for the production of pieces of furniture and furniture parts, of packaging materials, in house building or in interior finishing or in motor vehicles.

## Revendications

1. Corps moulé multicouche contenant de la lignocellulose constitué par
A) une couche centrale ou plusieurs couches centrales, contenant des particules contenant de la lignocellulose, qui peu(ven)t être obtenue(s) par l'utilisation d'un liant (a) et
B) une couche de recouvrement ou plusieurs couches de recouvrement, contenant des particules contenant de la lignocellulose, qui peu(ven)t être obtenue(s) par l'utilisation d'un liant (b),
le liant (a) étant choisi dans le groupe constitué par (a1) les résines de formaldéhyde et (a2) un isocyanate organique comprenant au moins deux groupes isocyanate ;
le liant (b) contenant les composants suivants :
un composant aqueux (I) contenant
(i) un polymère A qui est formé des monomères suivants :
a) 70 à 100% en poids d'au moins un acide monocarboxylique et/ou dicarboxylique éthyléniquement insaturé [monomère(s) A1] et
b) 0 à 30% en poids d'au moins un autre monomère éthyléniquement insaturé qui est différent des monomères A1 [monomère(s) A2] et
le cas échéant
(ii) un réticulant de bas poids moléculaire présentant au moins deux groupes fonctionnels qui sont choisis dans le groupe formé par les groupes hydroxy, acide carboxylique et ses dérivés, amine primaire, secondaire et tertiaire, époxy, aldéhyde,
un isocyanate organique comprenant au moins deux groupes isocyanate comme composant (II)
et le cas échéant un composant (III) sous forme de dispersion aqueuse, contenant
un ou plusieurs polymère(s) M qui est/sont formé(s) à partir des monomères suivants :
a) 0 à 50% en poids d'au moins un acide monomère éthyléniquement insaturé qui contient au moins un groupe époxyde et/ou au moins un groupe hydroxyalkyle [monomère(s) M1] et
b) 50 à 100% en poids d'au moins un autre monomère éthyléniquement insaturé qui est différent des monomères M1 [monomère(s) M2]
ainsi que le cas échéant des additifs usuels comme composant (IV),
et au moins une couche centrale A) contenant des particules expansées en matériau synthétique et le cas échéant au moins une couche de recouvrement B) contenant des particules expansées en matériau synthétique
et le liant (b) contenant le cas échéant un piège de formaldéhyde.

2. Corps moulé multicouche contenant de la lignocellulose selon la revendication 1, **caractérisé en ce que** le liant (b) contient un réticulant de bas poids moléculaire (ii) et ne contient pas de composant (III).

3. Corps moulé multicouche contenant de la lignocellulose selon la revendication 1, **caractérisé en ce que** le liant (b) ne contient pas de réticulant de bas poids moléculaire (ii), mais contient un composant (III).

4. Corps moulé multicouche contenant de la lignocellulose selon la revendication 1, **caractérisé en ce que** le liant (b) contient tant un réticulant de bas poids moléculaire (ii) qu'également un composant (III).

5. Corps moulé multicouche contenant de la lignocellulose selon la revendication 1 à 4, **caractérisé en ce que** le liant (b) contient un piège de formaldéhyde.

6. Corps moulé multicouche contenant de la lignocellulose selon la revendication 1 à 5, **caractérisé en ce qu'**il est à trois couches, doté d'une couche centrale A) et de deux couches de recouvrement B).

7. Corps moulé multicouche contenant de la lignocellulose selon la revendication 1 à 6, **caractérisé en ce que** le liant (a) est uniquement une résine de formaldéhyde (a1).

8. Corps moulé multicouche contenant de la lignocellulose selon la revendication 1 à 6, **caractérisé en ce que** le liant (a) est uniquement un isocyanate organique comprenant au moins deux groupes isocyanate (a2).

9. Corps moulé multicouche contenant de la lignocellulose selon la revendication 1 à 6, **caractérisé en ce que** le liant (a) contient le composant (a1) dans la plage de 70 à 99,9% en poids et le composant (a2) dans la plage de 0,1 à 30% en poids, à chaque fois par rapport à la somme de (a1) et de (a2) des substances pures non diluées.

10. Corps moulé multicouche contenant de la lignocellulose selon la revendication 1 à 9, **caractérisé en ce que** le liant (b) contient le composant (I) dans la plage de 30 à 90% en poids et le composant (II) dans la plage de 10 à 70% en poids, à chaque fois par rapport à la somme de (I) et de (II) des substances pures non diluées.

11. Corps moulé multicouche contenant de la lignocellulose selon la revendication 1 à 10, **caractérisé en ce que** les particules expansées en matériau synthétique présentent une densité apparente dans la plage de 10 à 100 kg/m³.

12. Corps moulé multicouche contenant de la lignocellulose selon la revendication 1 à 11 sous forme d'une plaque.

13. Procédé pour la fabrication d'au moins un corps moulé multicouche contenant de la lignocellulose selon les revendications 1 à 12, dans lequel on met en contact les particules de lignocellulose pour la couche centrale ou les couches centrales A) avec le liant (a) et les particules expansées en matériau synthétique, on met en contact les particules de lignocellulose pour la couche de recouvrement ou les couches de recouvrement B) avec le liant (b) et le cas échéant les particules expansées en matériau synthétique, on superpose dans l'ordre souhaité et on presse à température augmentée.

14. Utilisation d'un corps moulé multicouche contenant de la lignocellulose selon les revendications 1 à 12 pour la fabrication d'objets de tous types et dans le domaine de la construction.

15. Utilisation d'un corps moulé multicouche contenant de la lignocellulose selon les revendications 1 à 12 pour la fabrication de meubles et de pièces pour meubles, de matériaux d'emballage, dans la construction de maisons ou la décoration intérieure ou dans des véhicules automobiles.
